# EUROPEAN PATENT APPLICATION

(11) **EP 4 832 209 A2**
(43) Date of publication of application: **28.10.2026**
(21) Application number: 26204959.6
(22) Date of filing: 17.07.2025
(51) Int. Cl.: H01M 50/298

(54) **MODULAR HOUSING UNIT AND MODULAR HOUSING SYSTEM FOR ELECTRICAL CELL MODULES, AND A METHOD OF ASSEMBLING A MODULAR ELECTRICAL ENERGY STORAGE SYSTEM**

(30) Priority: 22.07.2024 GB 202410669; 06.06.2025 GB 202508974
(62) Document number(s) of the earlier application(s) in accordance with Art. 76 EPC: 25190291.2 / 4 685 927
(71) Applicant: Fortescue Zero Limited, Kidlington, England OX5 1GB (GB)
(72) Inventor: VESMA, Nathan, Kidlington, OX5 1GB (GB); TORDILLO, Manuel, Kidlington, OX5 1GB (GB); BROWN, Leon, Kidlington, OX5 1GB (GB); LUKEHURST, Ben, Kidlington, OX5 1GB (GB)
(74) Representative: HGF

(57) **Abstract**

The invention relates to a modular housing system for electrical cell modules, in particular for an electric vehicle. The system comprises a power convertor assembly and a plurality of housing units. Each housing unit comprises a base, having an upper face; a wall circumscribing the base and extending away to define a compartment opening; and a unit compartment, accessible through the compartment opening. The compartment opening is configured to receive at least one electrical cell module through the compartment opening so that the, or each, electrical cell module is mounted in the unit compartment. Each housing unit is configured so that its wall is releasably mountable in an assembled position to the corresponding wall of an adjacent housing unit. The power convertor assembly is configured to convert an electrical charge from the electrical modules of the respective modular housing system into an electrical drive output for a vehicle drive train.

## Description

### TECHNICAL FIELD

The invention relates to a modular housing unit and modular housing system for electrical cell modules, in particular for electrical cell modules for an electric vehicle. The invention also related to a method of assembling a modular electrical energy storage system.

### BACKGROUND

Energy storage systems, including electrical cell modules incorporating multiple individual cells, are used in a variety of applications including electric vehicles. A basic unit of an electrical storage system is a cell, also known as a battery or a battery cell. Cells are typically one of three common formats: pouch, prismatic or cylindrical, depending on the shape and characteristics of the cell housing. As used herein, prismatic cells may include pouch cells that are mounted within a cell frame or cell housing so as to give a predetermined shape to the pouch cell.

To use prismatic cells, a series, or stack, of prismatic cells is typically mounted to a support frame to provide an electrical cell module. The electrical cell module with a stack of cells is capable of storing and delivering more electrical power than a single cell.

Known electrical cell modules may be mounted indirectly to a vehicle chassis within a housing unit in order to enclose the electrical cell module and provide protection. In certain examples, the housing unit also provides space to enclose other electrical systems such as power inverters, fuses and safety components, power distribution assemblies (also known as a power distribution centres, PDC), or systems for monitoring performance of the electrical cell module.

The housing units typically have removable covers to enable the housing units to be stackable. In this way, the weight of an upper housing unit rests on the cover of the lower housing unit. Certain examples include feet or protrusions on the housing unit base to locate in recesses on cover to aligned stacked housing units. Alternatively, housing units include recesses in their peripheral wall to accommodate bolts that fix stacked housing units to one another. The recesses mean that the peripheral wall reduces the space available within the housing unit for the electrical cell module and additional components.

The cells of electrical cell modules generate heat during use and are susceptible to damage or thermal runaway. The close packing of cells in an electrical cell module increases the risk of thermal runaway. To mitigate the build-up of heat, it is known to include cooling for each housing unit. Certain examples include for example air cooling, employing fans to force air into the housing. Alternatively, cooling plates carrying coolant fluid are provided in the housing unit. Systems that require coolant fluids require multiple interconnectors and tubing to connect the cooling plate to a supply of coolant fluid.

A further known mitigation for thermal runaway in a housing is to use fire suppressant systems to flood whole compartment with suppressant fluid in response to detection of an elevated temperature within the housing unit. Again, a first suppressant system requires multiple interconnectors and tubing to connect a fluid supply to the housing unit to a supply of suppressant. Typically, systems including multiple electrical cell modules and / or multiple housing units respond to an elevated temperature by flooding the whole system with suppressant fluid. Exposure of cells to suppressant fluid stops the thermal runaway but renders the cells inoperable, meaning the system requires replacement before the vehicle in which it is installed is back in service.

Electrical cell modules for electric vehicles produce significant currents. It is a known problem to safely arm an electrical cell module, that is to safely switch the terminals of the electrical cell module to be live, after the electrical cell module is installed into the electric vehicle. It is also a known problem to safely disarm the electrical cell module, that is electrically isolate the terminals of the electrical cell module, prior to maintenance or removal of electrical cell modules mounted in an electric vehicle. It would be useful to selectively arm or selectively disarm any electrical cell modules within specific housing units while mounted into the electric vehicle.

It would be useful to provide cooling for electrical cell modules in an efficient manner. That is, to enable heat transfer away from the electrical cell modules using a reduced amount of energy. In particular, it would be useful to provide cooling of electrical cell modules for traction modules for heavy duty vehicles that reduces overall weight and complexity.

It would also be useful to convert electrical charge into an electrical drive output, for example an electrical traction drive output, for an electric vehicle drive system with increased efficiency. In particular it would be useful to provide an electrical traction output for heavy duty vehicles that uses off the shelf components, that is does not require bespoke high load or high voltage equipment.

It is an aim of certain examples or embodiments of the present invention to solve, mitigate or obviate, at least partly, at least one of the problems and/or disadvantages associated with the prior art.

### BRIEF SUMMARY

The invention is set out in the appended claims.

According to an aspect of the invention, there is provided a modular housing unit for supporting an electrical cell module in an electric vehicle, the housing unit includes:
a base having an upper face;
a wall circumscribing the base and extending away from the upper face to define a compartment opening; and
a unit compartment defined within the upper face and the wall, wherein the unit compartment is accessible through the compartment opening;
wherein the housing unit is configured to receive, optionally through the compartment opening, at least one electrical cell module for mounting in the unit compartment; and
wherein the wall is configured to be releasably mountable in an assembled position to a corresponding wall of a second housing unit so that, in the assembled position, the base of the second housing unit forms a closure of the compartment opening.

In this way, the wall of the housing unit provides a structural element for supporting electrical cell modules. By integrating load-bearing support with the wall of housing unit, the housing unit does not require additional structural elements to be used. Instead the weight of all components mounted within the unit compartment is transferred to the walls. Assembly time is reduced and the design also saves space in the electric vehicle. In addition, the housing units are fitted together to provide discrete unit compartments without requiring additional parts, such as covers. Manufacturing time and associated cost of parts is reduced.

Furthermore, the modular housing units are scalable, such that any desirable number of housing units may be readily secured together. The housing units are adaptable to the dimensions of the vehicle to which the housing units are mounted. The housing units are also adaptable to the electrical energy storage requirements of the vehicle and can be modified to supply a specified voltage, current, or charge storage capacity while retaining the advantages of the modular nature.

Aptly, the wall may extend from a proximal portion, engaged with the base of housing unit, to a distal portion. The distal portion defines a perimeter of the compartment opening.

Aptly, the wall may be releasable mounted to the base. Aptly, the wall is integrally formed with the base.

Aptly, the first housing unit may include at least one electrical cell module. In this way, the base of second housing encloses the at least one electrical cell module within the unit compartment.

Aptly, each electrical cell module of the at least one electrical cell module includes at least one stack of cells. The cells may be prismatic cells.

Aptly, the base of the housing unit may include a cooling plate. The cooling plate may be configured to contactingly engage each stack of cells of the at least one electrical cell module mounted in the unit compartment. The cooling plate may be configured to contactingly engage a power distribution assembly mounted in the unit compartment. In this way, the housing unit includes an integral means for cooling the cells, and optionally the power distribution assembly, of the electrical cell module. The cells, and optionally the power distribution assembly, may be maintained at an ideal operating temperature. The risk of a thermal runaway in cells is reduced. The risk of overheating of the power distribution assembly is reduced.

Aptly, the cooling plate may include a series of recesses. The series of recesses may be configured to conform to a lower face of each of the electrical cell modules mounted in the unit compartment. In this way, the cooling plate may be adapted according to the electrical cell module, increasing the surface to surface contact between the two. The cooling effectiveness of the cooling plate is further improved.

Aptly, the cooling plate may be releasably mounted to the base within the unit compartment. This enables the cooling plate to be removed for maintenance. This enables the cooling plate to be replaced for an alternative cooling plate for changing the electrical cell module mounted within the unit compartment. The housing unit is adaptable to, or even reusable with, different electrical cell modules.

Aptly, wherein the wall may be releasable mounted to the base, a cooling plate may be mounted between the wall and the base. Optionally, a perimeter of the cooling plate may be mounted between the wall and the base, for example through suitably positioned apertures. That is the cooling plate perimeter is sandwiched between the wall and the base, providing secure mounting of the cooling plate with fewer fixings.

Aptly, the base of the housing unit may include one or more openings through the base, and at least one support member spanning the one or more openings. The support members thereby assist in transferring weight to the wall. Providing openings reduces the weight of the housing unit, increasing efficiency of the vehicle in use.

With one or more openings in the base, the cooling plate may be mounted to the base to form a lower closure to the one or more openings. Again, the number of parts, and weight of the housing unit are kept to a minimum. Additionally to, or alternatively to, the cooling plate, shield plates may be located in apertures. The shield plates may form a lower closure of the one or more openings. The shield plates may provide protection for the components, including the cooling plate, within the unit compartment.

Aptly, the at least one electrical cell module may include a pair of electrical cell modules mounted in the unit compartment. The pair of electrical cell modules may be electrically connected in series to one another. The at least one electrical cell module may include a plurality of electrical cell modules mounted in the unit compartment. The plurality of electrical cell modules may be electrically connected in series to one another. Electrically connections within each housing unit may be provided by busbars. The busbars may be mounted to module terminals in any suitable configuration.

In these ways, the voltage and / or the current provided by the electrical cell modules within the housing unit may be adapted according to the requirements of the vehicle.

Aptly, the housing unit may be formed as a die-cast housing unit. Typically the housing unit may be formed as an aluminium die-cast housing unit.

Aptly, the wall of the housing unit may provide a structural support for the electrical cell modules received within the housing unit.

Aptly, the wall of housing unit may include an inner wall face, oriented into the unit compartment, and an outer wall face.

Aptly, the modular housing unit may include a first coolant manifold portion mounted to the outer wall face, wherein the first coolant manifold portion is fluidly connected to a coolant inlet in the base of the housing unit. The first coolant manifold portion may be integrally formed with the wall of the housing unit.

Aptly, the modular housing unit may include a second coolant manifold portion mounted to the outer wall face, wherein the second coolant manifold portion is fluidly connected to a coolant outlet in the base of the housing unit. The second coolant manifold portion may be integrally formed with the wall of the housing unit.

In these ways, a cooling plate in the housing unit may be fluidly connected to a coolant supply with a reduced number of parts. The coolant system, other than the cooling plate itself, is externally accessible for operators.

Aptly, the modular housing unit may include a first suppressant manifold portion mounted to the outer wall face. The first suppressant manifold portion may be fluidly connected to the unit compartment through an inlet bore formed through the wall. The first suppressant manifold portion may be integrally formed with the wall of the housing unit. Alternatively, the first suppressant manifold portion may be mounted to a plate, wherein the plate is releasably attached to an aperture through the wall. The inlet bore may be formed through the plate.

In these ways, each housing unit includes means for suppressing thermal runaway events. The suppressant fluid may be injected directly into the housing unit in which an elevated temperature as soon as it is detected. Each unit compartment may be flooded with suppressant fluid simultaneously, cooling each electrical cell module at the same time.

Aptly, the modular housing unit may include at least one connector port extending through the wall of the housing unit. Each connector port may support one or more unit terminals on an outer wall face of the housing unit. The unit terminals may be configured to be electrically connected to the at least one electrical cell module mounted within unit compartment.

Aptly, the housing unit may include a harness element. The harness element may be configured to electrically connect a first unit terminal of the housing unit to a second unit terminal of an adjacent, second housing unit. The harness element may be a low voltage harness element. In this way, the housing unit may be electrically connected to an adjacent housing unit from an external surface.

Aptly, the modular housing unit may include a fuse assembly. The fuse assembly may be mounted through an aperture in the wall, so that the fuse is accessible from the outer wall face of the housing unit. Optionally, the fuse assembly may be mounted through an aperture in the base. In either position, the fuse assembly may be configured so that a fuse is electrically connectable between an electrical cell module mounted in the unit compartment and a unit terminal of the housing unit. In these ways, the fuse assembly may be accessible from an external surface. The housing unit therefore may be armed or disarmed externally.

According to another aspect of the invention, there is provided a modular housing system for electrical cell modules for an electric vehicle, the modular housing system including a plurality of housing units according to any of the housing units described here.

According to yet another aspect of the invention, there is provided a modular housing system for electrical cell modules for an electric vehicle, the modular housing system including a plurality of housing units, each housing unit of the plurality of housing units including:
a base having an upper face;
a wall circumscribing the base and extending away from the upper face to define a compartment opening;
a unit compartment, accessible through the compartment opening and defined within the upper face and the wall, wherein the unit compartment is configured to receive, optionally through the compartment opening, at least one electrical cell module for mounting in the unit compartment; and
at least one electrical cell module mounted in the unit compartment;
wherein each housing unit is configured so that its wall is releasably mounted to the corresponding wall of an adjacent housing unit in an assembled position; and
wherein, in the assembled position, the base of a first housing unit of the plurality of housing units forms a closure of the compartment opening of an adjacent, second housing unit of the plurality of housing units.

Aptly, the first housing unit may include a first receiving surface and wherein, in the assembled position, the first receiving surface seals against the compartment opening of the second housing unit.

Aptly, each housing unit of the plurality of housing units may include a first coolant manifold portion mounted to the wall. The first coolant manifold portion may be fluidly connected to a coolant inlet in the base of the respective housing unit. In particular, each of the first coolant manifold portions may be configured to sealing abut the adjacent first coolant manifold portions when mounted in the assembled position. The first coolant manifold portions may be configured so that, in the assembled position, the first coolant manifold portions collectively form a first coolant manifold. The first coolant manifold may connectable to a coolant sub-system configured to provide a cooled coolant fluid.

In these ways, the first coolant manifold may be fluidly connected to every coolant inlet, and therefore cooling plate, of the modular housing system without additional tubing or connectors. By providing a sealing, the first coolant manifold may be assembled together that overcomes dimensional tolerances in respective first coolant manifold portions.

Aptly, each housing unit of the plurality of housing units may include a second coolant manifold portion mounted to the wall. The second coolant manifold portion may be fluidly connected to a coolant outlet in the base of the respective housing unit. In particular, each of the second coolant manifold portions may be configured to sealing abut the adjacent second coolant manifold portions when mounted in the assembled position. The second coolant manifold portions may be configured so that, in the assembled position, the second coolant manifold portions collectively form a second coolant manifold. The second coolant manifold may be connectable to a coolant sub-system configured to cool and recirculate a coolant fluid.

Aptly, the first coolant manifold and second coolant manifold may be opposingly positioned on the wall.

In these ways, the second coolant manifold may be fluidly connected to every coolant inlet, and therefore cooling plate, of the modular housing system without additional tubing or connectors.

Together, the first coolant manifold and the second coolant manifold enable all of the cooling plates of the modular housing system to be fluidly connected to a coolant sub-system with a minimal number of parts. The coolant sub-system may be provided in the vehicle to which the modular housing system is mounted, or may be secured to the modular housing system itself. The coolant sub-system thereby conveniently provides a recirculating supply of cooled coolant for distribution through the cooling plates during operation of the modular housing system.

Aptly, each housing unit of the plurality of housing units may include a first suppressant manifold portion mounted to the wall. Each first suppressant manifold portion may be fluidly connected to the unit compartment through an inlet bore formed through the wall. The first suppressant manifold portion may be integrally formed with the wall of the housing unit. Alternatively, the first suppressant manifold portion may be mounted to a plate, wherein the plate is releasably attached to an aperture through the wall. The inlet bore may be formed through the plate.

In the assembled position, the first suppressant manifold portions of the plurality of housing units are configured to collectively form a first suppressant manifold. Each first suppressant manifold is connectable to a suppressant sub-system configured to dispense a suppressant fluid to the modular housing system.

In this way, the modular housing system may respond to an elevated temperature by injecting suppressant to reach each electrical cell module. The suppressant fluid may be injected directly into each housing unit as soon as an elevated temperature is detected. Each unit compartment may be flooded with suppressant fluid simultaneously, cooling each electrical cell module at the same time.

Aptly, each housing unit may include a valve configured to selectively dispense a fire-suppressant fluid to corresponding housing unit of the plurality of housing units. If a thermal event occurs, suppression can be targeted to the enclosure assembly containing the module with the fault. This reduces the amount of suppressant that the vehicle is required to carry and prevents additional layers being damaged with the suppressant fluid.

Aptly, the proximal portion of a first housing unit and the distal portion of an adjacent second housing unit together may include a series of mutually compatible fixings spaced apart around the respective proximal portion and distal portion. The mutually compatible fixings may each include a bolt and a nut.

Aptly, each distal portion may include a series of locating dowels for locating with apertures in the adjacent housing unit. The locating dowels align the adjacent housing units to one another in the assembled position as any fixings are secured together.

Aptly, in the assembled position, the plurality of housing units may collectively provide a structural support assembly for the electrical cell modules received within the plurality of housing units. The structural support assembly may be is configured to be releasably mounted a vehicle chassis structure.

In this way, the modular housing system can be installed into a vehicle with a minimal number of parts. Assembly time is reduced.

Aptly, each housing unit of the plurality of housing units may include at least one pair of connector ports extending through the wall of the housing unit to support a pair of unit terminals on an outer wall face of the housing unit, and wherein the at least one electrical cell module mounted within the unit compartment is electrically connected in series between the pair of unit terminals.

Aptly, the modular housing system may include at least one harness element. The, or each, harness element may be configured to electrically connect a first unit terminal of a first housing unit to a second unit terminal of an adjacent, second housing unit.

Aptly, each housing unit of the plurality of housing units may include a fuse assembly. The, or each, fuse assembly may have a fuse arranged to complete an electrically connection between the electrical cell module and a unit terminal of the housing unit. The fuse assembly may be mounted through an aperture in the wall so that the fuse is accessible from the outer wall face.

Aptly, one of the housing units of the plurality of housing units may include a power distribution assembly mounted in the unit compartment. This housing unit may be a lower housing unit of the modular housing system. The power distribution assembly may be electrically connected to the unit terminals of the plurality of housing units. The power distribution assembly may include one or more power terminals for discharging electrical charge from the electrical cell modules mounted within the plurality of housing units.

Aptly, the base of a lower housing unit may include a cooling plate. Aptly, the upper housing unit may include a lower cooling plate and an upper cooling plate. Aptly, the upper cooling plate may be a part of a closure panel of an upper housing unit. Any one or more cooling plate may be fluidly connected with a coolant sub-system, as well as associated coolant conduits and / or coolant manifolds of the associated housing unit. Aptly, one, or each, of the cooling plate of the lower housing unit and the upper cooling plate of the upper housing unit, may comprise features of the cooling plates described in this document.

Aptly, a cooling plate of a lower housing unit may be configured to contactingly engage, particularly to conform to, a component mounted to an exterior surface of modular housing system. Aptly, the cooling plate of a lower housing unit may be configured to contactingly engage, on an exterior surface of modular housing system one or more of: a power convertor assembly, a coolant sub-system, or a thermal conditioning unit of a coolant sub-system. Aptly, the cooling plate of a lower housing unit may be configured to conform to, on an exterior surface of modular housing system, one or more of: a power convertor assembly, a coolant sub-system, or a thermal conditioning unit of a coolant sub-system.

Aptly, a upper cooling plate of an upper housing unit may be configured to contactingly engage, particularly to conform to, a component mounted to an exterior surface of modular housing system. Aptly, a upper cooling plate of an upper housing unit may be configured to contactingly engage, on an exterior surface of modular housing system, one or more of: a power convertor assembly, a coolant sub-system, or a thermal conditioning unit of a coolant sub-system. Aptly, the upper cooling plate of an upper housing unit may be configured to conform, on an exterior surface of modular housing system, one or more of: a power convertor assembly, a coolant sub-system, or a thermal conditioning unit of a coolant sub-system.

By providing a cooling plate in a lower housing unit and / or an upper cooling plate on an upper housing unit, the modular housing system includes an integral means for cooling components mounted to its exterior. The components may be maintained at an ideal operating temperature. The risk of overheating or thermal damage of exterior components is reduced.

Aptly, one of the housing units of the plurality of housing units may include a closure panel mounted to the compartment opening and forming a closure of the unit compartment. This housing unit may be an upper housing unit of the modular housing system.

It will be noted that the wall of a housing unit described here may include a number of discrete features and components, described below, for example mounted to the wall, formed with the wall, or disposed on or through an aperture in the wall. Unless indicated otherwise, each of these features and components are configured to be independent of one another so that, for example, the position, orientation or means of engaging with the wall of any first feature or component has no bearing on that of any second feature or component.

According a further aspect of the invention, there is provided a method of assembling a modular electrical energy storage system, the method including:
providing a plurality of housing units, each housing unit of the plurality of housing units including:
   - a base having an upper face;
   - a wall circumscribing the base and extending away from the upper face to define a compartment opening; and
   - a unit compartment, accessible through the compartment opening; providing a plurality of electrical cell modules;
inserting at least one electrical cell module into each housing unit, optionally through the respective compartment opening, and mounting the electrical cell module to the housing unit; and
releasably mounting a first housing unit of the plurality of housing units to a second housing unit of the plurality of housing units in an assembled position so that, in the assembled position, the base of the first housing unit forms a closure of the compartment opening of the second housing unit.

Aptly, the method may include a further step of releasably mounting the wall to the base. Aptly, a cooling plate may be releasably mounted between the wall and the base. Optionally, a perimeter of the cooling plate may be mounted between the wall and the base, for example through suitably positioned apertures. That is the cooling plate perimeter is sandwiched between the wall and the base, providing secure mounting of the cooling plate with fewer fixings.

Aptly, the method may include a further step of providing a first coolant manifold portion mounted to the wall of each housing unit of the plurality of housing units. Each first coolant manifold portion may be fluidly connected to a coolant inlet in the base of the respective housing unit. Accordingly, the step of releasably mounting the first housing unit to the second housing unit in the assembled position may also form a coolant flow path between the respective first coolant manifold portions.

Aptly, the step of releasably mounting the first housing unit to the second housing unit in the assembled position may also provide a sealed connection between the respective first coolant manifold portions. In certain arrangements, the step may include sealingly abutting the first coolant manifold portion of a first housing unit against the first coolant manifold portion of a second housing unit. In certain arrangements, the sealed connection may be provided by fastening a connector between the first coolant manifold portions of a first housing unit and a second housing unit.

Aptly, the method may include a further step of providing a second coolant manifold portion mounted to the wall and of each housing unit of the plurality of housing units. Each second coolant manifold portion may be fluidly connected to a coolant outlet in the base of the respective housing unit. Accordingly, the step of releasably mounting the first housing unit to the second housing unit in the assembled position may also form a coolant flow path between the respective second coolant manifold portions.

Aptly, the step of releasably mounting the first housing unit to the second housing unit in the assembled position may also provide a sealed connection between the respective second coolant manifold portions. In certain arrangements, the step may include sealingly abutting the second coolant manifold portion of a first housing unit against the second coolant manifold portion of a second housing unit. In certain arrangements, the sealed connection may be provided by fastening a connector between the second coolant manifold portions of a first housing unit and a second housing unit.

Aptly, the method may include a further step of providing a first suppressant manifold portion mounted to the wall of each housing unit of the plurality of housing units. Each first suppressant manifold portion may be fluidly connected to the respective unit compartment through inlet bore formed through the wall. Accordingly, the step of releasably mounting the first housing unit to the second housing unit in an assembled position may also form a suppressant flow path between the respective first suppressant manifold portions.

Aptly, the method may include the further steps of:
providing at least one pair of connector ports for each housing unit of the plurality of housing units, wherein each connector port extends through the wall and supports a unit terminal on an outer wall face of the housing unit;
electrically connecting the at least one electrical cell module of each housing unit in series between the respective pair of unit terminals;
and mounting at least one harness element to the unit terminals of an adjacent pairing of housing units to electrically connect the pairing in series.

In this way, the method of assembly provides an externally accessible means for an operator to electrically connect the housing units of the modular housing system.

Aptly, the method may include the further steps of:
providing a fuse assembly mounted through an aperture in the wall of each housing unit of the plurality of housing units, wherein the fuse assembly is configured so that a fuse is installable from the respective outer wall face of the housing unit;
installing a fuse into the fuse assembly to complete an electrical connection between a first electrical cell module and a first unit terminal.

In this way, the method of assembly provides an externally accessible means for an operator to electrically connect the electrical cell modules of the modular housing system. An externally accessible means for an operator to electrically connect the electrical cell modules to a power distribution assembly is provided. An externally accessible means to safely arm the electrical circuit of the modular housing system is provided.

According to an aspect of the invention, there is provided, a modular housing system for electrical cell modules for an electric vehicle, the modular housing system includes:
a coolant sub-system; and
a plurality of housing units, wherein each housing unit of the plurality of housing units including:
   a base having an upper face;
   a wall circumscribing the base and extending away from the upper face to define a compartment opening; and
   a unit compartment, accessible through the compartment opening and defined within the upper face and the wall, wherein the housing unit is configured to receive at least one electrical cell module, optionally through the compartment opening, for mounting in the unit compartment; and
   at least one electrical cell module mounted in the unit compartment;
wherein each housing unit is configured so that its wall is releasably mountable in an assembled position to the corresponding wall of an adjacent housing unit;
wherein the coolant sub-system is configured to deliver coolant to cool the at least one electrical cell module.

In this way, each cell module is cooled efficiently. The cooling of a modular housing system is controllable according to the requirements from the electrical cell modules within it. The overall volume of coolant is minimised, decreasing the power requirements for the coolant sub-system. The number and complexity of the fluid connections and conduits is kept to a minimum.

Aptly, each housing unit may include a coolant inlet to deliver the coolant to cool the at least one electrical cell module.

Aptly, the coolant sub-system may include a thermal conditioning unit mounted to the plurality of housing units, for example to an upper end of the modular housing system. The thermal conditioning unit may be fluidly connected to each coolant inlet. In this way, the coolant sub-system effectively cools each cell module in each housing unit.

Aptly, the plurality of housing units may be stacked on top of one another. That is, the plurality of housing units occupy the same footprint as any one of the housing units. Aptly, the thermal conditioning unit may be stacked on top of the housing units. That is, the thermal conditioning unit may occupy the same footprint as the housing units.

Aptly, in the assembled position, the base of a first housing unit may form a closure of the compartment opening of an adjacent, second housing unit.

Aptly, the base may include a cooling plate.

Aptly, the, or each, housing unit may be configured to circulate coolant within the unit compartment. That is the, or each, electrical cell module may be at least partially immersed in coolant within the unit compartment. In this way, the coolant may directly contact each cell of the electrical cell module, further improving heat transfer.

Aptly, the wall may be releasably coupled to the base. Aptly, a cooling plate may be releasable mounted to the base. Aptly, a cooling plate may be mounted between the wall and the base. Optionally, a perimeter of the cooling plate may be mounted between the wall and the base, for example through suitably positioned apertures. That is the cooling plate perimeter is sandwiched between the wall and the base, providing secure mounting of the cooling plate with fewer fixings.

Aptly, the coolant sub-system may include a thermal conditioning unit mounted to an upper end of the modular housing system.

Aptly, a first housing unit may include a first receiving surface and, in the assembled position, the first receiving surface may seal against the compartment opening of a second housing unit.

Aptly, each housing unit may include a coolant inlet in the base of the housing unit. Aptly, the coolant inlet may be fluidly connected to a cooling plate in the housing unit. Aptly, the coolant inlet may be fluidly connected into the unit compartment.

Aptly, each housing unit may include a coolant outlet. Aptly, the coolant outlet may be fluidly connected to a cooling plate in the housing unit. Aptly, the coolant outlet may be fluidly connected into the unit compartment.

Aptly, each housing unit may include a first coolant manifold portion mounted to the wall and fluidly connected to between the coolant inlet and the thermal conditioning unit. The first coolant manifold portions may be configured so that, in the assembled position, the first coolant manifold portions collectively form a first coolant manifold.

Aptly, each housing unit includes a second coolant manifold portion mounted to the wall and fluidly connected between the thermal conditioning unit and a coolant outlet in the base of the respective housing unit.

Aptly, the second coolant manifold portions may be configured so that, in the assembled position, the second coolant manifold portions collectively form a second coolant manifold.

Aptly, the electrical cell module may include a plurality of cells. For example, the plurality of cells may be a plurality of blade cells.

In this way, the performance and reliability of the electrical cell module may be maximised. The number of cells in the electrical cell module and / or the overall dimensions of each modular housing unit are variable according to the vehicle they are used in. The modular housing unit is adaptable to the size and shape requirements of individual vehicles.

Aptly, the plurality of cells of the electrical cell module may be stacked in a longitudinal direction.

Aptly, the, or each, cell of the plurality of cells may include a pair of cell terminals.

Aptly, the electrical cell module may include a busbar assembly electrically connected to the cell terminals. The cell terminals may be provided on opposing ends of the cells. Where the cells are blade cells, the cell terminals may be provided on opposing ends of the blade cells.

Aptly, the busbar assembly may include a series of busbar elements fixed along the opposing ends of the cells. The busbar assembly may extend longitudinally along the plurality of cells. The busbar assembly at each end of the cells is substantially straight substantially throughout its length. This is facilitated particularly, by aligned cell terminals of stacked blade cells.

In these ways, the plurality of cells in the electrical cell module may be electrically connected to one another with a minimum number of part, reducing overall weight of each housing unit.

Aptly, in the assembled position, the plurality of housing units may collectively provide a structural support assembly for the thermal conditioning unit and the electrical cell modules received within the plurality of housing units. The structural support assembly may configured to be releasably mounted a vehicle chassis structure.

Aptly, each housing unit may include at least one pair of connector ports extending through the wall of the housing unit. The at least one pair of connector ports may support a pair of unit terminals on an outer wall face of the housing unit. At least one electrical cell module mounted within the unit compartment may be electrically connected in series between the pair of unit terminals.

Aptly, the modular housing system may include a harness element. The harness element may be configured to electrically connect a first unit terminal of a first housing unit to a second unit terminal of an adjacent, second housing unit.

Aptly, the modular housing system may include a power convertor assembly configured to convert an electrical charge from the electrical modules of the modular housing system into an electrical drive output for an electric vehicle drive system.

Aptly, the power convertor assembly may be configured to convert an electrical charge from the electrical modules of the modular housing system into an electrical traction drive output for an electric vehicle traction drive system
Aptly, the electrical drive output may have a voltage in a range of from 200 volts to 4,000 volts, for example 800 volts to 2,000 volts, for example 1800 volts.

Aptly, the power convertor assembly may be mounted to a lower end of the modular housing system. Aptly, the power convertor assembly may be mounted integrally with the modular housing system, for example mounted integrally with a modular housing unit.

Aptly, the coolant sub-system may be configured so that its thermal conditioning unit is fluidly connected to the power convertor assembly to provide cooling of the power convertor assembly.

Accordingly another aspect of the invention, there is provided an electric vehicle energy storage system including one or more modular housing system described here.

Accordingly a further aspect of the invention, there is provided an electric vehicle energy storage system including a plurality of modular housing system, wherein each modular housing system includes
a coolant sub-system; and
a plurality of housing units, wherein each housing unit of the plurality of housing units including:
   a base having an upper face;
   a wall circumscribing the base and extending away from the upper face to define a compartment opening; and
   a unit compartment, accessible through the compartment opening and defined within the upper face and the wall, wherein the housing unit is configured to receive at least one electrical cell module, optionally through the compartment opening, for mounting in the unit compartment; and
   at least one electrical cell module mounted in the unit compartment;
wherein each housing unit is configured so that its wall is releasably mountable in an assembled position to the corresponding wall of an adjacent housing unit;
wherein the coolant sub-system is configured to deliver coolant to cool the at least one electrical cell module.

A coolant sub-system for each modular housing system of the energy storage system provides cooling more efficiently than if one coolant sub-system was fluidly connected to each modular housing system. Cooling of each modular housing system can be controlled according to the requirements from the electrical cell modules within it. Such control is achieved with automotive-rated components, that is, without requiring bespoke components for heavy duty use. The overall volume of coolant is reduced, decreasing the power requirements for the coolant sub-system. The number and complexity of the fluid connections and conduits is reduced.

Aptly, each coolant sub-system may be fluidly connected to a radiator.

Aptly, each coolant-sub systems may be fluidly connected to a common radiator, for example of the vehicle.

Aptly, each modular housing system may include a power convertor assembly configured to convert an electrical charge from the electrical modules of the respective modular housing system into an electrical drive output for a vehicle drive train.

According to another aspect of the invention, there is provided, a modular housing system for electrical cell modules for an electric vehicle, the modular housing system includes:
a power convertor assembly; and
a plurality of housing units, wherein each housing unit of the plurality of housing units including:
   a base having an upper face;
   a wall circumscribing the base and extending away from the upper face to define a compartment opening; and
   a unit compartment, accessible through the compartment opening and defined within the upper face and the wall, wherein the housing unit is configured to receive at least one electrical cell module, optionally through the compartment opening, for mounting in the unit compartment; and
   at least one electrical cell module mounted in the unit compartment;
wherein each housing unit is configured so that its wall is releasably mountable in an assembled position to the corresponding wall of an adjacent housing unit;
wherein the power convertor assembly is configured to convert an electrical charge from the electrical modules of the respective modular housing system into an electrical drive output for a vehicle drive train.

Providing an integrated power convertor assembly with each modular housing system, permits better control of the electrical charge produced by each housing unit. The current carried by the power convertor assembly is less than if a single power convertor assembly is used for the whole electrical energy storage system. Consequently, the weight and complexity of the power distribution assembly is significantly reduced. Furthermore, the output, for example voltage and / or current, of each modular housing system is independently configurable. The number of cells, or the number of electrical cell modules, in each modular housing system is variable.

Aptly, the power convertor assembly may be a DC-DC power convertor.

Aptly, the modular housing system may include a coolant sub-system. The coolant sub-system may be configured to deliver coolant to cool the at least one electrical cell module.

### BRIEF DESCRIPTION OF THE SEVERAL VIEWS OF THE DRAWINGS

Examples will now be described further with reference to the figures in which:
FIG. 1A shows a perspective view of an example housing unit according to an aspect, with a pair of electrical cell modules mounted in the housing unit;
FIG. 1B shows a close up perspective view of the highlighted portion of FIG. 1A;
FIG. 2 shows a perspective view of an example modular housing system according to an aspect, including a plurality of the housing units shown in FIG. 1A;
FIG. 3 shows a lower perspective view of the modular housing system of FIG. 2;
FIG. 4 shows a close up bottom view of the housing unit of FIG. 1A;
FIG. 5 shows a perspective view of an example electrical cell module for use in an example housing unit;
FIG. 6A shows a perspective view, and FIG. 6B shows a close-up lower view, of an example lower housing unit of the modular housing system of FIG. 2;
FIG. 7A shows a perspective view of another example housing unit according to an aspect;
FIG. 7B shows a perspective view of the housing unit of FIG. 7A, with a cooling plate mounted to its base;
FIG. 7C shows a perspective view of the housing unit of FIG. 7A, with a fuse and a suppressant manifold portion positioned for attachment to the wall of the housing unit;
FIG. 8A shows a side view of another example modular housing system according to an aspect, including a plurality of the housing units shown in FIG. 7A;
FIG. 8B shows a close-up side view of connector ports of the modular housing system of FIG. 8A;
FIG. 9A shows a close-up perspective view of the housing unit and fuse assembly of FIG. 7C, with an electrical cell module mounted in the housing unit;
FIG. 9B shows a close-up side view of FIG. 9A with the cover of fuse assembly removed;
FIG. 10 shows an exploded perspective view of an example modular housing unit according to an aspect;
FIG. 11A shows a perspective view, and FIG. 11B a side view, of an example modular housing system according to an aspect, including a plurality of the housing units of FIG. 10A;
FIG. 12 shows an electrical energy storage system including a plurality of the modular housing systems of FIG. 11A and FIG. 11B.

### DETAILED DESCRIPTION

Certain terminology is used in the following description for convenience only and is not limiting. The words 'lower', and 'upper', designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected' and 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second' etc. merely indicate that different instances of like objects are being referred to and are not intended to imply that the objects so described must be in a given sequence, either temporally, spatially, in ranking or in any other manner.

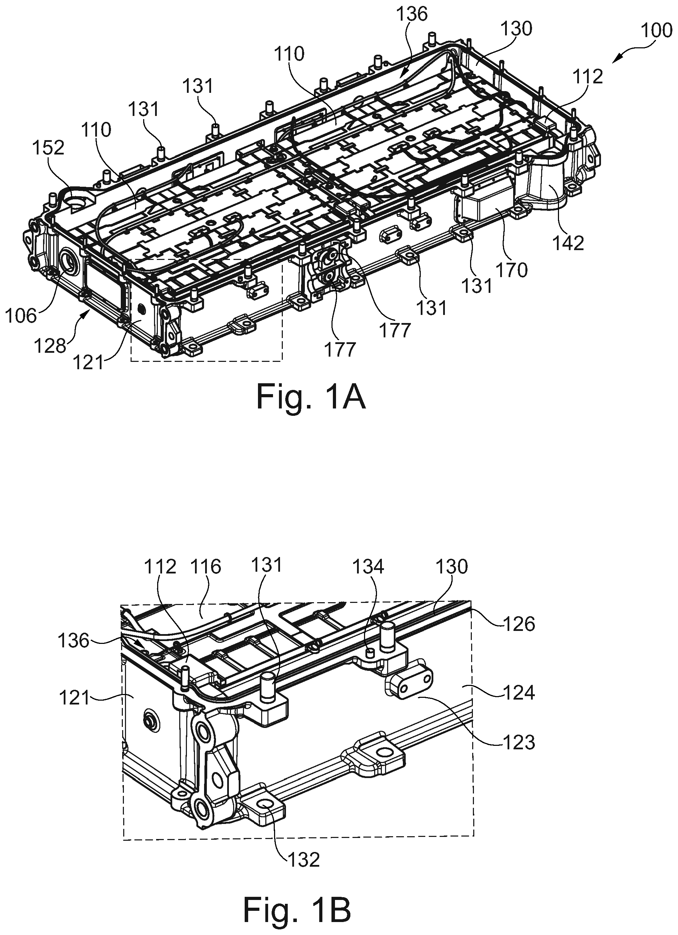

Referring now to FIG. 1A and FIG. 1B, there is shown an example modular housing unit 100 according to an aspect. The housing unit 100 is configured to support a pair of electrical cell modules 110 for installation in an electric vehicle. The housing unit 100 as shown is one housing unit 100 of a plurality of housing units 100 that together form an example modular housing system 190 as described here.

The housing unit 100 includes a base 120 having an upper face. A wall 121 circumscribes the base 120, extending away from the upper face to define a compartment opening 130. A unit compartment 136 is defined within the upper face and the wall 121. The unit compartment 136 is accessible through the compartment opening 130. In particular the unit compartment 136 is accessible to electrical cell modules 110 via the compartment opening 130. The housing unit 100 is configured to receive through the compartment opening 130 each electrical cell module 110 installed in the housing unit 100.

The housing unit 100 is a modular housing unit. That is, the housing unit 100 is configured so that housing units 100 of the same configuration are able to be assembled together to form a larger modular housing system. The housing unit 100 is formed as a die-cast housing unit. In the example, the housing unit 100 is die-cast from an aluminium material.

Each electrical cell module 110 is mounted in the unit compartment 136. The housing unit 100 is configured so that each electrical cell module 110 is mounted within the unit compartment 136 so that the wall 121 supports the weight of each electrical cell module 110. The wall 121 of the housing unit 100 provides a structural support for the electrical cell modules 110 mounted within the unit compartment 136 of the housing unit 100. In this way, the wall 121 is load-bearing and the base 120 is configured so that the weight of the electrical cell modules 110 is transferred to the wall 121, for example through support members in the base 120 that are fixed to the wall 121.

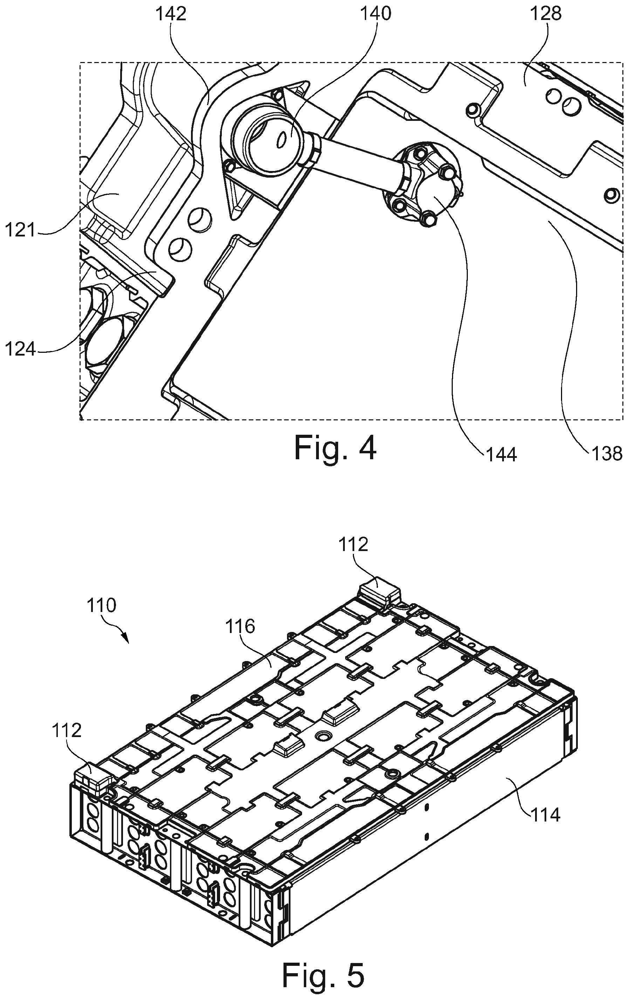

Referring additionally to FIG. 5, the electrical cell module 110 is shown in isolation. The electrical cell module 110 includes a module frame 114 and a module closure panel 116. The module frame 114 and module closure panel 116 enclose a series of cell stacks (not shown) for storing electrical energy as is known in the art. The cell stacks may each include a series of cells, typically prismatic cells, stacked in a longitudinal direction. A busbar assembly (not shown) is positioned to the underside of the module closure panel 116 to electrically connect the cell terminals of each cell to a pair of module terminals 112. In this way, the module terminals 112 provide a means to provide electrical energy to, or to discharge electrical energy from, the cells in the electrical cell module 110.

The housing unit 100 includes a pair of electrical cell modules 110 mounted in the unit compartment 136. The pair of electrical cell modules 110 are electrically connected in series to one another, using an intermediary busbar 186 to connect suitable module terminals.

The wall 121 extends from a proximal portion 124 to a distal portion 126. The proximal portion 124 is engaged with, typically adjoined to, the base 120 of housing unit 100. The distal portion 126 defines a perimeter of the compartment opening 130. In the example shown, the proximal portion 124 is a lower portion of the wall 121 and the distal portion 126 is an upper portion of the wall 121. The proximal portion 124 circumscribes the base 120.

The wall 121 includes an inner wall face 122. The inner wall face 122 is oriented into the unit compartment 136. The wall 121 also includes an outer wall face 123. The outer wall face 123 is oriented in opposition to the inner wall face 122. The outer wall face 123 is accessible to an operator when electrical cell modules 110 are mounted in the housing unit 100. The outer wall face 123 is accessible to an operator when the housing unit 100 is mounted to a vehicle chassis for use in storing, charging and discharging electrical energy for the vehicle.

The wall 121 includes a breather valve 106 mounted in the wall 121. The breather valve 106 provides a fluid flow path through the wall 121, from unit compartment 136 to the surrounding atmosphere. The breather valve 106 is configured to selectively open to eject fluid from the unit compartment 136. In this way, if the unit compartment 136 is subject to a pressure increase, for example due to gases generated by a fault in a cell of the electrical cell module, the pressure is released through the breather valve 106.

The wall 121 is configured to be releasably mountable in an assembled position to a corresponding wall of a second housing unit. More particularly, the distal portion 126 is configured to be releasably mountable in an assembled position to a corresponding proximal portion of a second housing unit. In the assembled position, the base of the second housing unit forms a closure of the compartment opening 130. The base of second housing encloses the electrical cell modules 110 within the unit compartment 136.

Optionally, the proximal portion 124 may be configured to be releasably mountable in an assembled position to a corresponding distal portion of a third housing unit. In the corresponding assembled position, the base 120 of the housing unit 100 forms a closure of the compartment opening of the third housing unit. The base 120 of housing encloses the electrical cell modules within the unit compartment of the third housing unit.

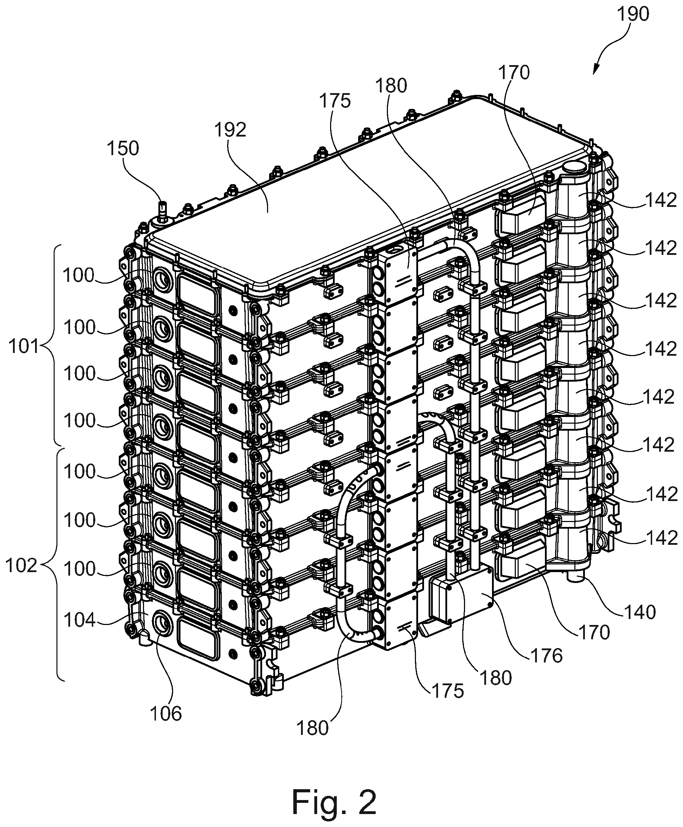

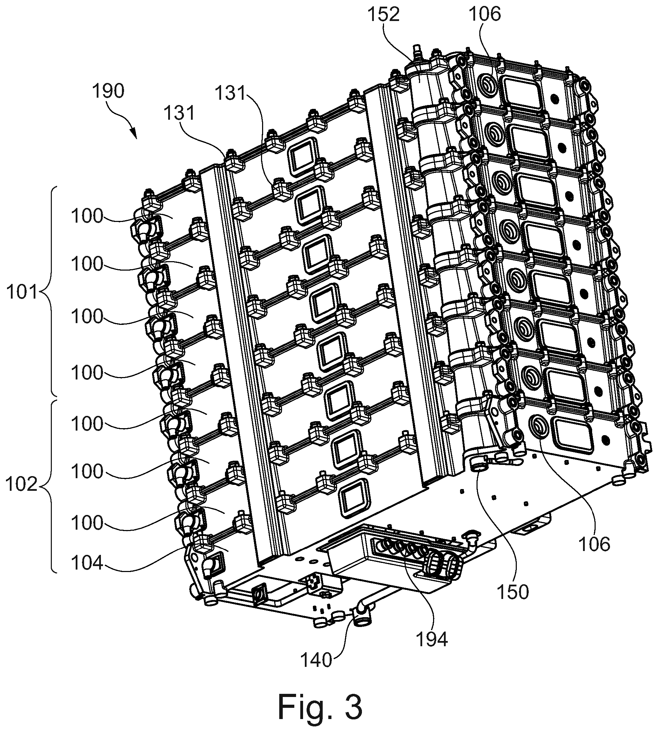

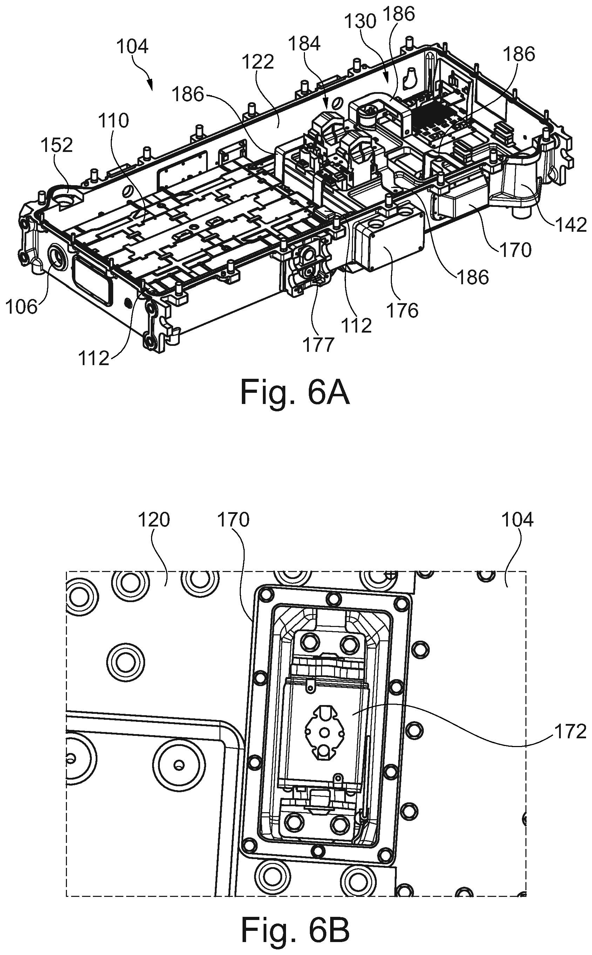

The second housing unit, and any third housing unit, may be substantially the same as the housing unit 100 shown in FIG. 1A and FIG. 1B. In an alternative arrangement, any one of the housing unit 100, the second housing unit or the third housing unit may be a lower housing unit 104, such as the lower housing unit 104 described with reference to FIG. 6A and FIG. 6B. Further details about the assembled housing units are described in more detail below, with reference to FIG. 2 and FIG. 3.

The housing unit 100 includes a receiving surface 128. The receiving surface 128 is elongate receiving surface on the underside of the proximal portion 124 of the wall 121. The receiving surface 128 circumscribes the underside of the base 120 of the housing unit 100. In the assembled position, the receiving surface 128 of the housing unit 100 seals against the compartment opening of the second housing unit, ensuring the base 120 of the housing unit 100 forms an air-tight closure of the unit compartment of the adjacent housing unit. Optionally, one or both of the compartment opening 130 and the receiving surface 128 may also include a compressible sealing member positioned to engage the receiving surface 128 of the adjacent housing unit in the assembled position.

The housing unit 100 includes a connector assembly 175. The connector assembly 175 includes a pair of connector ports 181, each connector port 181 housing one of a pair unit terminals 177. Each connector port 181 extends through the wall 121 of the housing unit 100 to support a respective unit terminal 177 on the outer wall face 123. Within the unit compartment 136, the unit terminals are electrically connected via a series of busbar 186 to the electrical cell modules 110 mounted within unit compartment 136. In this way, the unit terminals 177 are accessible by an operator when the housing unit 100 is mounted to a second housing unit in the assembled position. The two electrical cell modules 110 are electrically connected in series with one another between the unit terminals 177. The unit terminals 177 provide a negative unit terminal 177 and a positive unit terminal 177.

The housing unit 100 includes a fuse assembly 170. The fuse assembly 170 is mounted through an aperture in the wall 121 of the housing unit 100 so that its fuse 172 is accessible from the outer wall face 123 of the housing unit 100 by an operator. The fuse assembly 170 is configured so that a fuse 172 is electrically connectable between the electrical cell modules 110 mounted in the unit compartment 136 and one of the pair of unit terminals 177 of the housing unit 100. In alternative examples, such as a lower housing unit 104 of a modular housing system 190, the fuse assembly may be mounted in the base of the housing unit.

The fuse 172 is releasably connectable to the fuse assembly 170. In this way, the fuse 172 may remain out of the fuse assembly 170 until the operator wishes to arm the housing unit 100. Until the fuse 172 is installed in the fuse assembly 170 the electrical connection between the electrical cell modules 110 and the unit terminals 177 is incomplete. That is, without the fuse 172 installed in the fuse assembly 170, the unit terminals 177 are not live. The fuse 172 may be installed into the fuse assembly 170 once the housing unit 100 is assembled with other housing units 100 to form a modular housing system 190, or when the modular housing system 190 is mounted to a vehicle chassis. The housing unit 100 is armed, and the electrical connection between electrical cell modules 110 and unit terminals 177 completed, by installation of the fuse 172. With the fuse 172 installed in the fuse assembly 170, the unit terminals 177 are live.

The base 120 includes a cooling plate 138. The cooling plate 138 is formed of a double layer of plates with a void between the plates that forms a flow path for coolant. In the example, the cooling plate 138 is formed by a pair of aluminium plates spaced apart from one another to provide a serpentine coolant flow path between diametrically opposed corners of the cooling plate 138. In alternative examples, the cooling plate 138 may be any suitable form capable of providing a coolant flow path therethrough for cooling the unit compartment 136. For example the cooling plate may include a grid or network of cavities or pipes mounted to a plate.

The housing unit 100 includes a first coolant manifold portion 142. The first coolant manifold portion 142 is mounted to the outer wall face 123 and aligned vertically. That is, the first coolant manifold portion 142 extends from the distal portion 126 of the wall 121 to the proximal portion 124. In the example, the first coolant manifold portion 142 is integrally formed with the wall 121. The second coolant manifold portion 152 has an outer shell formed of the same material as the wall 121.

Referring additionally to FIG. 4, the first coolant manifold portion 142 is fluidly connected to a coolant inlet 144. The coolant inlet 144 extends from the proximal portion 124 in the base 120 to a cooling plate 138. The coolant inlet 144 provides a fluid flow path from the first coolant manifold portion 142 to the cooling plate 138.

The housing unit 100 includes a second coolant manifold portion 152. The second coolant manifold portion 152 is mounted to the outer wall face 123 and aligned vertically. That is, the second coolant manifold portion 152 extends from the distal portion 126 of the wall 121 to the proximal portion 124. The second coolant manifold portion 152 is located at an opposing corner of the wall 121 to the first coolant manifold portion 142. In the example, the second coolant manifold portion 152 is integrally formed with the wall 121. The second coolant manifold portion 152 has an outer shell formed of the same material as the wall 121.

The second coolant manifold portion 152 is fluidly connected to a coolant outlet. The coolant outlet is substantially the same as the coolant inlet 144 shown in FIG. 4, and extends from the cooling plate 138 in the base 120 to the proximal portion 124 of the wall 121. The coolant outlet provides a fluid flow path from the cooling plate 138 to the second coolant manifold portion 152.

In this way, the first coolant manifold portion 142, cooling plate 138 and second coolant manifold portion 152 together provide a coolant flow path for coolant to cool the unit compartment 136.

Referring now to FIG. 2 and FIG. 3, there is shown a modular housing system 190 for electrical cell modules for an electric vehicle. The modular housing system including a pluralities of housing units 100 described with reference to FIG. 1A and FIG. 1B.

Each housing unit 100 of the plurality of housing units 100 includes a base 120, having an upper face, and a wall 121 circumscribing the base 120 and extending away from the upper face to define a compartment opening 130.

Each housing unit 100 of the pluralities of housing units 100 also includes a unit compartment 136, accessible through the compartment opening 130, and defined within the upper face and the wall 121. Each compartment opening 130 is configured to receive at least one electrical cell module 110 through the compartment opening 130 for mounting in the unit compartment 136.

Each housing unit 100 of the plurality of housing units 100 includes at least one electrical cell module 110 mounted in the unit compartment 136. In the example, the lower housing unit 104 of the plurality of housing units 100 includes a single electrical cell module 110 and a power distribution assembly 184, as described in more detail with reference to FIG. 6A and FIG. 6B. Apart from the lower housing unit 104, each other housing unit 100 of the plurality of housing units 100 includes two electrical cell modules 110. The lower housing unit 104 is substantially the same as the other housing units 100 of the pluralities of housing units other than as described below.

Each housing unit 100 is configured so that its wall 121 is releasably mounted to the corresponding wall of an adjacent housing unit 100 in an assembled position. In the assembled position, the base 120 of a first housing unit 100 of the plurality of housing units 100 forms a closure of the compartment opening 130 of an adjacent, second housing unit 100 of the plurality of housing units 100.

Referring additionally to FIG. 1B, the proximal portion 124 of each housing unit 100 and the distal portion 126 of the corresponding adjacent housing unit 100 together include a series of mutually compatible fixings. The fixings are each spaced around the respective proximal portion 124 and distal portion 126. A series of first fixings 131 are spaced around the distal portion 126. A series of second fixings 132 are spaced apart around the proximal portion 124. In the example, each first fixing 131 is a threaded bolt and each second fixing 132 is a receiving bore for the threaded bolt. The housing units are secured together by using a bolt on the threaded bolt to clamp it to the receiving bore.

Each distal portion 126 also includes a series of locating dowels 134 for locating with apertures in the adjacent housing unit. The locating dowel 134 align the adjacent housing units to one another in the assembled position as the first fixings 131 and second fixings 132 are secured together.

In the assembled position, the walls 121 of the plurality of housing units 100 collectively provide a structural support assembly for the electrical cell modules received within the modular housing system 190. The structural support assembly is configured to be releasably mounted to a vehicle chassis structure so that each electrical cell module 110 mounted within the respective unit compartment 136 is supported by the wall 121 of that housing unit 100. The assembled walls 121 of the housing units 100 together provide a structural support for all of the electrical cell modules 110, and any other components such as the power distribution assembly 184, mounted within the respective unit compartments 136 of the pluralities of housing units. In this way, the walls 121 of the modular housing system 190 are load-bearing and the weight of the electrical cell modules 110 is transferred to the vehicle chassis via the assembled walls 121.

As mentioned above, each housing unit 100 further includes a fuse assembly 170 having a fuse 172 arranged to complete an electrical connection between one electrical cell module 110 and one unit terminal 177 of each housing unit 100. The fuse 172 is typically installed into each fuse assembly 170 once the modular housing system 190 is assembled so that the unit terminals 177 are live and electrically connected to the power distribution assembly 184.

The plurality of housing units 100 each have a connector assembly 175. Each connector assembly 175 is configured to receive at least one harness element 179. Each harness element 179 is mountable to an adjacent pair of connector assemblies 175. The harness element 179 connects one unit terminals 177 a first connector assembly 175 to a unit terminal 177 of opposing polarity belonging to an adjacent, second connector assembly 175. In this way, each harness element 179 enables the electrical cell modules 110 of a first housing unit 100 to be connected electrically in series with the electrical cell modules 110 of a second housing unit 100.

In the example shown, the modular housing systems 190 includes a first group 101 of housing units 100 and a second group 102 of housing units. The first group 101 is mounted above the second group 102. The electrical cell modules 110 of the first group 101 of housing units 100 are electrically connected in series with one another using the associated unit terminals 177 and harness elements 179. The electrical cell modules 110 of the second group 102 of housing units 100 are electrically connected in series with one another using their own unit terminals 177 and harness elements 179. By dividing the modular housing system 190 into a first group 101 and a second group 102, the voltage and current provided by the cells in the housing units 100 can be adapted to provide the most suitable combination for the vehicle. Stacking groups of housing units 100 on top of one another ensures the footprint occupied by the housing units 100 is minimised.

Referring additionally to FIG. 6A, there is shown a lower housing unit 104 of the modular housing system 190. The lower housing unit 104 includes a single electrical cell module 110 and a power distribution assembly 184 mounted in the unit compartment 136. The power distribution assembly 184 is configured to electrically connect the electrical cell modules 110 of the modular housing system 190 to a pair of power terminals 194. The power terminals 194 provide a means to electrically connect the electrical cell modules 110 with external components, such as the drive system of the vehicle to which the modular housing system 190 is mounted.

In common with other housing units 100, the lower housing unit 104 includes a cooling plate 138 mounted in the base of the housing unit 104. In this way, both the electrical cell module 110 and the power distribution assembly 184 benefit from the cooling provided by the cooling plate 138.

The lower housing unit 104 includes a connector assembly 175 mounted to the outer wall face 123. The connector assembly 175 has a single unit terminal 177, that is accessible by an operator in the same manner as the connector assemblies 175 of the other housing units 100. The single unit terminal 177 is connected to a unit terminal 177 of the housing unit 100 above using a harness element 179.

The connector assembly 175 does not require a second unit terminal 177. Instead, a module terminal 112 of the electrical cell module 110 in the lower housing unit 104 is electrically connected to the power distribution assembly 184 by a busbar 186 within the unit compartment 136 of lower housing unit 104.

The lower housing unit 104 includes a secondary connector assembly 176. The secondary connector assembly 176 includes a secondary pair of connector ports through the wall 121. The secondary connector assembly 176 is mounted to the outer wall face 123 to the wall 121. The secondary connector assembly 176 includes a pair of secondary unit terminals configured to electrically connect with a pair of cables 180, external of the housing units. Within the unit compartment 136 of the lower housing unit 104, each secondary unit terminal of the secondary connector assembly 176 is electrically connected to the power distribution assembly 184 via a series of busbars 186.

Accordingly, the lower housing unit 104 is configured so that electrical energy provided by the modular housing system 190 is divided into two electrically-parallel inputs to the power distribution assembly 184. The connector assembly 175 of the lower housing unit 104 and one module terminal 112 of the corresponding electrical cell module 110 electrically connects the first group 101 of housing units 100 to the power distribution assembly 184. The secondary connector assembly 176 of the lower housing unit 104 electrically connects the second group 102 of housing units 100 to the power distribution assembly 184. Each group 101, 102 of housing units are electrically connected to the power distribution assembly 184 of the lower housing unit 104.

The housing unit 100 at the opposing end of the modular housing system 190 to the lower housing unit 104 is an upper housing unit. The upper housing unit includes a closure panel 192 mounted to its compartment opening 130, providing a closure for the unit compartment 136 of the upper housing unit.

As described above, each housing unit 100 of the modular housing system 190 includes a first coolant manifold portion 142 mounted to its wall 121 and fluidly connected to a coolant inlet 144 in the base 120 of the respective housing unit. Each of the first coolant manifold portions 142 is configured to sealing abut the adjacent first coolant manifold portions 142 when mounted in the assembled position. In this way, with modular housing system 190 assembled, the first coolant manifold portions 142 collectively form a first coolant manifold 140. The first coolant manifold 140 is fluidly connected to each coolant inlet 144, and thereby to the corresponding cooling plate 138 of the modular housing system 190.

Each housing unit 100 of the modular housing system 190 includes a second coolant manifold portion 152 mounted to its wall 121 and fluidly connected to a coolant outlet in the base 120 of the respective housing unit. Each of the second coolant manifold portions 152 is configured to sealing abut the adjacent second coolant manifold portions 152 when mounted in the assembled position. In this way, with modular housing system 190 assembled, the second coolant manifold portions 152 collectively form a second coolant manifold 150. The second coolant manifold 150 is fluidly connected to each coolant outlet, and thereby to the corresponding cooling plate 138 of the modular housing system 190.

A sealing member, such a compressible sealing ring, is typically provided between each pair of first coolant manifold portions 142. The sealing member ensures a resilient seal between the abutting surfaces, ensuring any dimensional tolerances between housing units 100 are overcome.

In the example, the first coolant manifold 140 and the second coolant manifold 150 are opposingly positioned on the walls 121 of the modular housing system 190.

Each of the first coolant manifold 140 and the second coolant manifold 150 are fluidly connected to a coolant sub-system. The coolant sub-system may be provided in the vehicle to which the modular housing system 190 is mounted, or may be secured to the modular housing system 190 itself. The coolant sub-system provides a recirculating supply of cooled coolant for distribution through the cooling plates of the modular housing system 190 using the first coolant manifold 140 and second coolant manifold 150.

The modular housing system 190 may be assembled using a method according to an aspect.

In a first step of the method, there is provided a plurality of housing units 100, such as the housing unit 100 and lower housing unit 104 described here. Each housing unit 100 of the plurality of housing units 100 includes: a base 120 having an upper face; a wall 121 circumscribing the base 120 and extending away from the upper face to define a compartment opening 130; and a unit compartment 136, accessible through the compartment opening 130

In a second step of the method, a plurality of electrical cell modules 110 are provided. At least one electrical cell module 110 is inserted into each housing unit 100 through the respective compartment opening 130 and mounted to the housing unit 100. One electrical cell module 110 is inserted into the lower housing unit 104. A pair of electrical cell modules 110 is inserted into each of the other housing units 100. The electrical cell modules 110 of each housing unit 100 is connected electrically in series to the respective pair of unit terminals 177. The electrical connections with the unit compartment 136 are formed by attaching busbars 186 to the module terminals 112 and unit terminals 177 in a suitable configuration.

In a third step of the method, a first housing unit 100 of the plurality of housing units 100 is releasably mounted to a second housing unit 100 in an assembled position. In the assembled position, the base 120 of the first housing unit 100 forms a closure of the compartment opening 130 of the second housing unit 100. Each housing unit 100 is electrically connected to its adjacent housing units by mounting harness elements 179 between connector assemblies 175. Suitable cables 180 are used to electrically connect the first group 101 of housing units 100 and the second group 102 of the housing units 100 through the lower housing unit 104 to the power distribution assembly 184.

Subsequently, the modular housing system 190 is armed by installing a fuse 172 into the fuse assembly 170 of each housing unit 100. Installing each fuse 172 completes an electrical connection between the respective first electrical cell module 110 and first unit terminal 177 so that the unit terminals 177 are live. Installing all fuses 172 in the first group 101 or the second group 102 of housing units 100 completes an electrical connection between the respective group 101, 102 and the power distribution assembly 184 in the lower housing unit 104.

The arming step, of a housing unit 100 or of a group of housing units 100, may be carried out once the modular housing system 190 is mounted to a vehicle chassis and ready to be connected to supply electrical energy to the vehicle.

Depending upon the configuration of the housing units 100, additional aspects of the method may be undertaken. So, in the example described with reference to FIG. 1A to FIG. 6B, the step of releasably mounting first and second housing units 100 to one another in the assembled position, may also provides a coolant flow path between the respective first coolant manifold portions 142 of each housing unit 100 and another coolant flow path between the respective second coolant manifold portions 152.

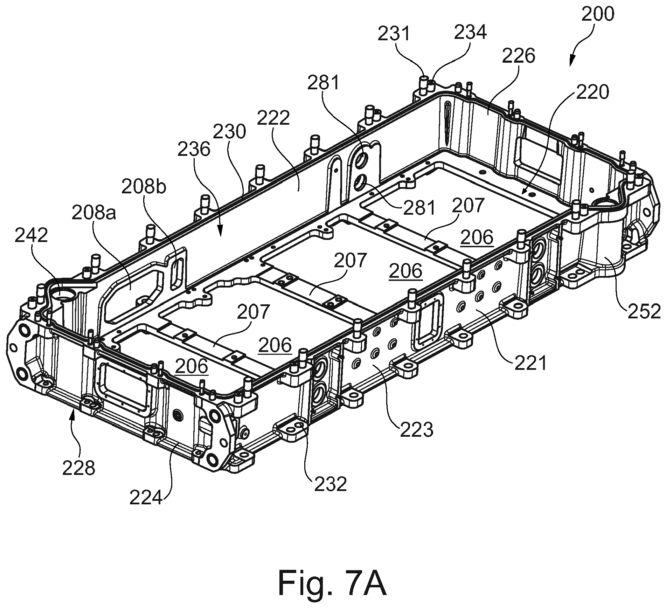

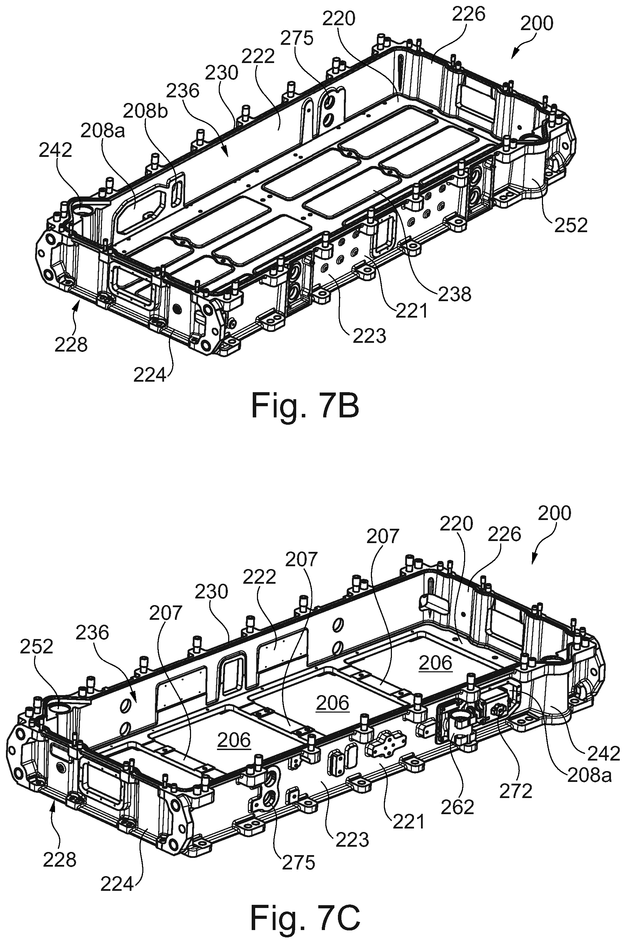

Referring now to FIG. 7A to FIG. 9B, there is shown a second example modular housing system 290 and associated housing units 200.

The housing units 200 are each similar to the housing units 100 described above, including a base 220 having an upper face. A wall 221 circumscribes the base 220, extending away from the upper face to define a compartment opening 230. A unit compartment 236 is defined within the upper face and the wall 221. The unit compartment 236 is accessible through the compartment opening 230. In particular the unit compartment 236 is accessible to electrical cell modules 210 via the compartment opening 230.

Each housing unit 200 is a modular housing unit. One of the housing units 200 is a lower housing units 204. One of the housing units 200 is an upper housing unit with a closure panel 292 mounted to the compartment opening 230. The lower housing unit 204 includes a power distribution assembly 284 and associated power terminals 294.

Each housing unit 200 is configured to receive through the compartment opening 230 the electrical cell modules 210 installed in the housing unit 200. The electrical cell modules 210 mounted in the unit compartments 236 are substantially the same as those described with reference to FIG. 5.

The cooling plate 238 is releasably mounted to the base 220 within each unit compartment 236. As shown particularly by comparing FIG. 7A and FIG. 7B, each base 220 includes a series of openings 206 through the base 220, and number of support members 207 spanning the one or more openings 206. The cooling plate 238 rests on the support members 207 in within the unit compartment 236. That is, the cooling plate 238 is mounted to the base 220 to form a lower closure to the one or more openings 206. Optionally, a shield plate (not shown) may be located in each opening 206 to protect the lower surface of the cooling plate 238.

Each electrical cell module 210 is mounted within the unit compartment 236 so that the wall 221 supports the weight of the cooling plate 238, as well as each electrical cell module 210. That is, the wall 221 of the housing unit 200 provides a structural support for the electrical cell modules 210 and the cooling plate 238 mounted within the unit compartment 236.

The cooling plate 238 is configured to contactingly engage each stack of cells of the electrical cell modules 210 mounted in the unit compartment 236. In the example, the cooling plate 238 includes a series of recesses. The recesses are configured to conform to a lower face of each of the electrical cell modules 210 mounted in the unit compartment. The cells of the electrical cell module 210 rest in contact with a recess to maximise the rate of heat transfer from the cells to the cooling plate 238.

Each housing unit 200 of the modular housing system 290 includes a first coolant manifold portion 242 and second coolant manifold portion 252 corresponding to those in the modular housing system 190 described above. When the modular housing system 290 is assembled, each first coolant manifold portion 242 is configured to form a corresponding first coolant manifold 240. When the modular housing system 290 is assembled, each second coolant manifold portion 252 is configured to form a corresponding second coolant manifold 250.

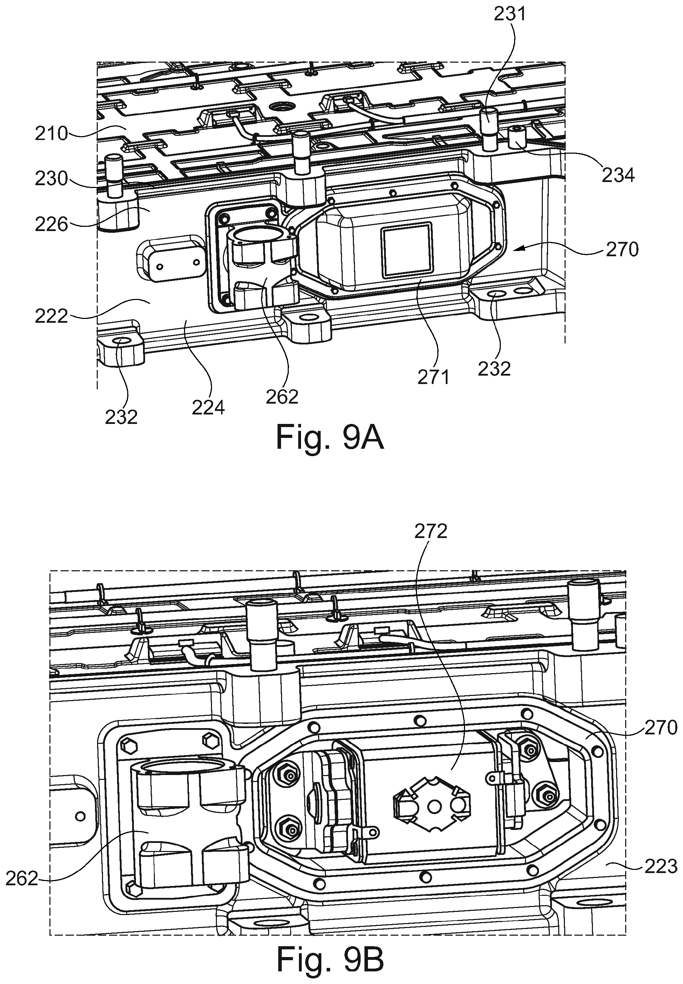

As shown in FIG. 7A, the housing unit 200 includes a first suppressant manifold portion 262. The first suppressant manifold portion 262 is mounted to the outer wall face 223 and aligned vertically. That is, the first suppressant manifold portion 162 extends between the distal portion 226 and the proximal portion 224 of the wall 221. Referring additionally to FIG. 9B, the first suppressant manifold portion 262 is attached to a mounting plate that is fixed over one of the apertures 208b in the wall 221. The first suppressant manifold portion 262 is fluidly connected to the unit compartment 236 through an inlet bore formed through the mounting plate.

When each housing unit 200 is assembled to form the modular housing system 290, the first suppressant manifold portions 262 of the plurality of housing units 200 collectively form a first suppressant manifold 260. Each first suppressant manifold portion 262 is connected to the adjacent first suppressant manifold portions 262 by an intermediary tube section. The tube sections are sealed within the open ends of each first suppressant manifold portion 262 and allow the first suppressant manifold 260 to be constructed while ensuring any dimensional tolerances in the assembled housing units 200 are overcome.

The first suppressant manifold 260 is connectable to a suppressant sub-system. The suppressant sub-system may be provided in the vehicle to which the modular housing system 290 is mounted, or may be secured to the modular housing system 290 itself. The suppressant sub-system provides a supply of suppressant fluid for injection into the unit compartment unit compartments 236 in response to detection of a thermal event within.

Optionally, the suppressant sub-system may selectively control which housing unit 200 or housing units 200 the suppressant fluid is injected into, for example by including valves with each first suppressant manifold portion 262. In this way, the suppressant sub-system may be configured to provide suppressant to the unit compartment 236 experiencing a thermal event. The thermal event would be controlled and eliminated without injecting suppressant fluid into other housing units 200 in the modular housing system 290. The suppressant fluid would be used more efficiently and unaffected housing units 200 would be unaffected by the thermal event.

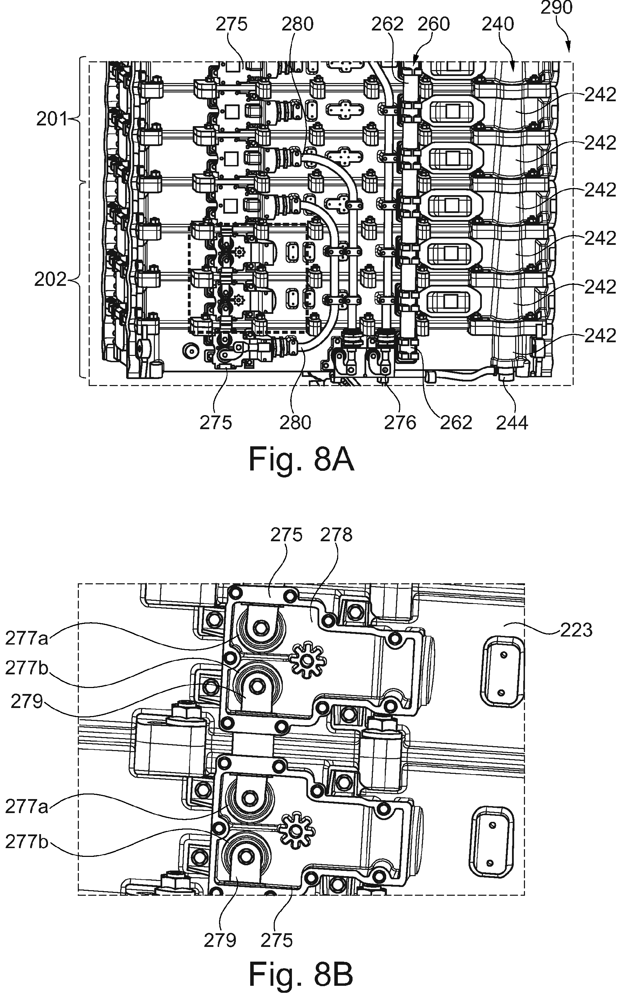

Referring particularly to FIG. 7A, FIG. 8A and FIG. 8B, each housing unit 200 includes a pair of connector ports 281, as well as apertures 208a, 208b extending through the wall 221. The connector assemblies 275 include unit terminals 277a, 277b and interconnecting harness elements 279. The connector ports 281 support the unit terminals 277a, 277b so they are accessible from the outer wall face 223. The unit terminals 277a, 277b are themselves mounted to the wall 221 using terminal plate 278.

Each housing unit 200 of the modular housing system 290 includes a fuse assembly 270 and connector assembly 275 corresponding to those in the modular housing system 190 described above. Corresponding harness elements 279 are used to electrically connect adjacent connector assemblies 275. Likewise, the housing units 200 are divided into a first group 201 of housing units 200 and a second group 202 of housing units 200.

Accordingly, the lower housing unit 204 is configured so that electrical energy provided by the modular housing system 290 is divided into two electrically-parallel inputs to the power distribution assembly. Suitable cables 280 are used to electrically connect the first group 201 of housing units 200 and the second group 202 of the housing units 200 through the lower housing unit 204 to the power distribution assembly.

The connector assembly 275 of the lower housing unit 204 and one module terminal of the corresponding electrical cell module 210 electrically connect the first group 201 of housing units 200 to the power distribution assembly. The secondary connector assembly 276 of the lower housing unit 204 electrically connects the second group 202 of housing units 200 to the power distribution assembly. Each group 201, 202 of housing units are electrically connected in parallel to the power distribution assembly of the lower housing unit 204.

Referring additionally to FIG. 9A and FIG. 9B, the modular housing system 290 is armed by installing a fuse 272 into the fuse assembly 270 of each housing unit 200. A cover 271 is then fixed to the fuse assembly 270. Installing each fuse 272 completes an electrical connection between the respective first electrical cell module 210 and first unit terminal 277a so that the unit terminals 277a, 277b are live. Installing all fuses 272 in the first group 201 or the second group 202 of housing units 200 completes an electrical connection between the respective group and the power distribution assembly in the lower housing unit 204.

The arming step, of a housing unit 200 or of a group of housing units 200, may be carried out once the modular housing system 290 is mounted to a vehicle chassis and ready to be connected to supply electrical energy to the vehicle.

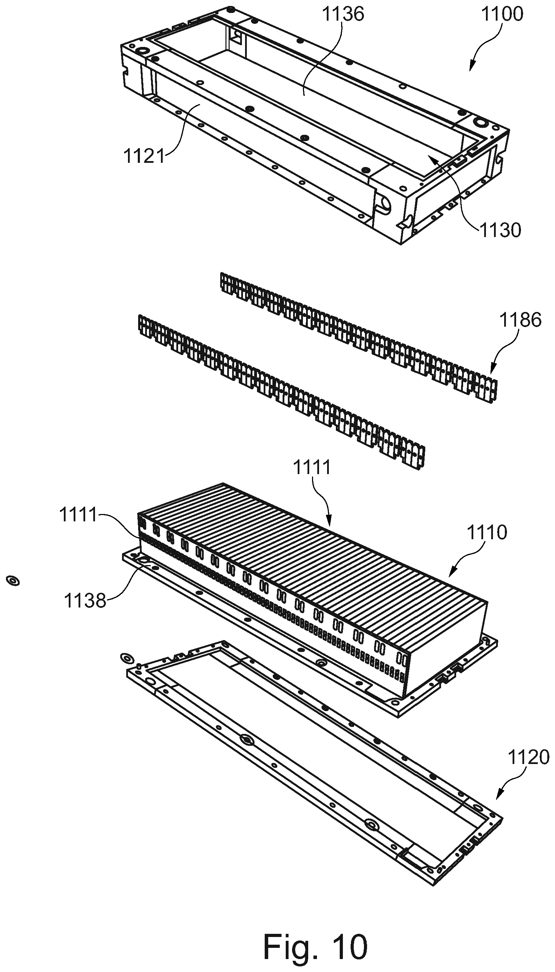

Referring now to FIG. 10 to FIG. 11B, there is shown an example electrical energy storage system 1195 according to aspects of the invention. The electrical energy storage system 1195 includes a plurality of housing units 1100 and a coolant sub-system configured to deliver coolant to cool at least one electrical cell module 1110 within the electrical energy storage system 1195.

Referring particularly to FIG. 10, there is shown an example housing unit 1100 of the electrical energy storage system 1195. The housing unit 1100 is similar to the housing units 100, 200 described above, including a base 1120 having an upper face. A wall 1121 circumscribes the base 1120. The wall 1121 is releasable coupled to the base 1120, for example using a plurality of fasteners around the wall 1121, and oriented to extend away from the upper face. The wall 1121 defines a compartment opening 1130. A unit compartment 1136 is defined within the upper face of the base 1120 and the wall 1121. The unit compartment 1136 is accessible through the compartment opening 1130.

The unit compartment 1136 receives and encloses an electrical cell module 1110 formed of plurality of cells stacked in a longitudinal direction. In the example, the cells are blade cells. The cells are stacked to abut against one another.

Each cell of the unit compartment 1136 includes a pair of cell terminals 1111. The cell terminals 1111 are arranged on opposing ends of the cell so that a plurality of cell terminals 1111 extends along each side of the electrical cell module 1110. The cell terminals 1111 on each side are aligned with one another.

The electrical cell module 1110 includes a busbar assembly 1186. The busbar assembly 1186 is formed of a first series of busbar elements and a second series of busbar elements. The first series of busbar elements is fixed to the cell terminals along one side of the electrical cell module 1110 and the second series of busbar elements fixed to the cell terminals along the opposing side of the electrical cell module 1110. Each busbar element may be fixed any suitable number of cell terminals, and any configuration of polarities, so as to control the voltage and / current of the electrical cell module 1110.

Each housing unit 1100 includes a cooling plate 1138 providing coolant to cool the electrical cell module 1110. Each cooling plate 1138 is fluidly connected with a thermal conditioning unit mounted on the upper end of the housing unit 1100. In this way, the coolant sub-system includes the thermal conditioning unit 1171, the cooling plate 1138 of each housing unit 1100, as well as associated coolant conduits and / or coolant manifolds.

The cooling plate 1138 is substantially the same as the cooling plates 138, 238 described with respect to other examples, and is fluidly connected using coolant inlets and a first coolant manifold made up of coolant manifold portions. In this way, a flow path for coolant is formed from the thermal conditioning unit 1171, through a first coolant manifold then the cooling plates of each housing unit 1100. The coolant flow path returns to the thermal conditioning unit 1171 by a second coolant manifold.

As will be appreciated, the coolant sub-system, including thermal conditioning unit, also may be incorporated with the modular housing systems 190, 290 so that each housing unit 100, 200 includes its own coolant sub-system to cool the electrical cell modules therein.

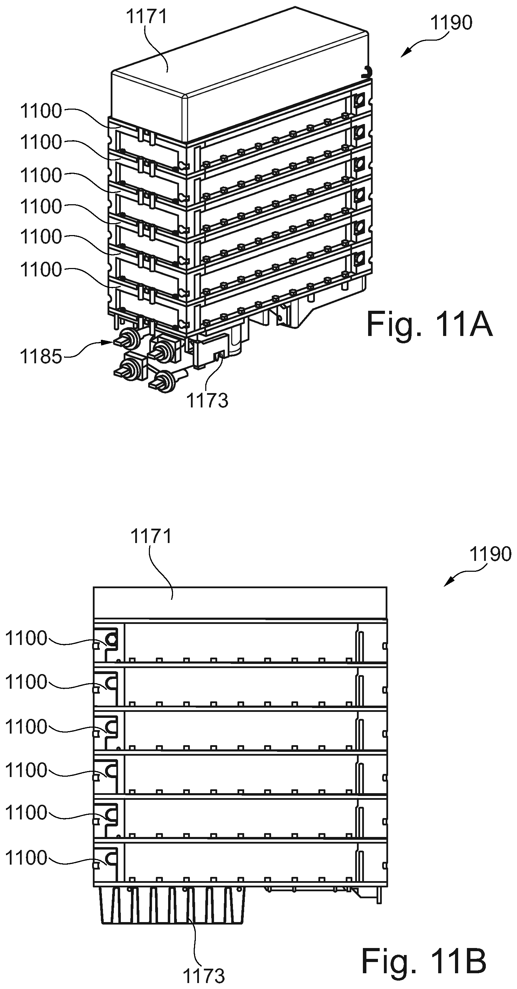

Referring additionally to FIG. 11A and FIG. 11B, there is shown the modular housing system 1190, including a plurality of housing units 1100 and the coolant sub-system. In the example, the thermal conditioning unit 1171 of the coolant sub-system is mounted to an upper end of the housing units 1100.

The modular housing system 1190 includes a power convertor assembly 1173. The power convertor assembly 1173 includes a DC-DC voltage convertor to convert an electrical charge from the electrical modules within the modular housing system 1190. In this way, the voltage provided by the electrical modules can be stepped up to provide an electrical drive output for an electric vehicle drive system. The electrical drive output is configurable to provide a voltage suitable for an electric vehicle traction drive system. In the example, the power convertor assembly 1173 provides an electrical drive output at 1800 volts, sufficient to power the traction drive system of heavy duty industrial vehicle.

The coolant sub-system is configured so that its thermal conditioning unit 1171 is fluidly connected to the power convertor assembly 1173. That is, the coolant flow path extends from the thermal conditioning unit 1171, through the first coolant manifold, to the power convertor assembly 1173. The coolant flow path returns to the thermal conditioning unit 1171 by the second coolant manifold.

Although not shown, it will be understood that each modular housing system 1190 may include one or more of: a suppressant system, a harness element, a fuse assembly, and a power distribution assembly mounted in the unit compartment, as described with reference to other examples. The associated advantages may of each of these features may be applied equally to the modular housing system 1190 of FIG. 10 to FIG. 11B.

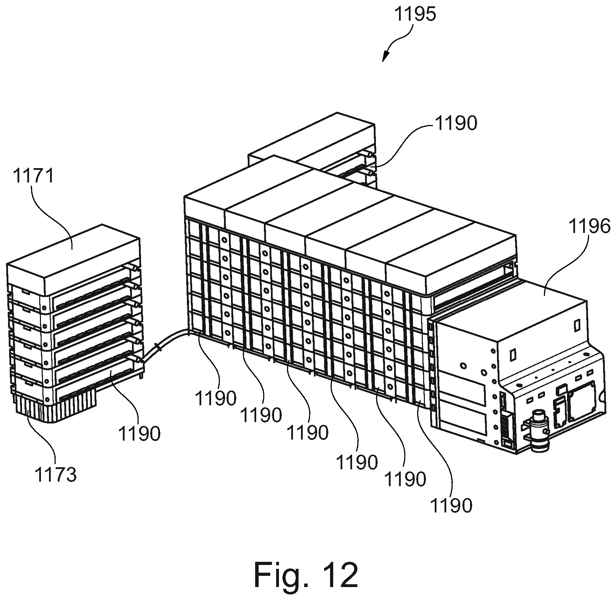

Referring additionally to FIG. 12, there is shown an electrical energy storage system 1195 including a plurality of modular housing systems 1190. Each modular housing system 1190 includes a thermal conditioning unit 1171 and an integrated power convertor assembly 1173 (identified in one example of FIG. 12). Each power convertor assembly 1173 is configured to convert an electrical charge from the electrical cell modules 1110 of the respective modular housing system 1190 into an electrical drive output for a vehicle drive train.

The thermal conditioning unit 1171 of each coolant sub-system is fluidly connected to a radiator, to provide a means to transfer heat from each modular housing system 1190 to the ambient surroundings. In particular, each thermal conditioning unit 1171 may be fluidly connected to a common radiator, for example a radiator mounted in the associated vehicle, to transfer heat efficiently to an exposed location on the vehicle.

The coolant sub-systems cool each cell module more efficiently than if one coolant sub-system was fluidly connected to all modular housing systems 1190. Cooling of each modular housing system 1190 can be controlled according to the requirements from the electrical cell modules within it. The overall volume of coolant is reduced, decreasing the power requirements for the coolant sub-system. The number and complexity of the fluid connections and conduits is reduced.

The electrical energy storage system 1195 also includes a power distribution assembly1196. The power distribution assembly 1196 is used to direct electrical drive output from the electrical energy storage system 1195 to the vehicle drive train. The power distribution assembly 1196 also allows the electrical energy storage system 1195 to be charged between uses, by selectively connecting to a suitable charging system.

Providing an integrated power convertor assembly 1173 with each modular housing system 1190, permits better control of the electrical charge produced by each housing unit 1100. The current carried by the power convertor assembly 1173 is less than if a single power convertor assembly is used for the whole electrical energy storage system 1195. Consequently, the weight and complexity of the power distribution assembly 1196 is significantly reduced.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

The invention is defined in the claims. However, below there is provided non-exhaustive lists of non-limiting examples and clauses. Any one or more of the features of these examples and clauses may be combined with any one or more features of another example, clause, embodiment, or aspect described herein.

Example Ex1: A modular housing system for electrical cell modules for an electric vehicle, the modular housing system comprising:
a coolant sub-system; and
a plurality of housing units, wherein each housing unit of the plurality of housing units comprising:
   a base having an upper face;
   a wall circumscribing the base and extending away from the upper face to define a compartment opening; and
   a unit compartment, accessible through the compartment opening and defined within the upper face and the wall, wherein the housing unit is configured to receive at least one electrical cell module, optionally through the compartment opening, for mounting in the unit compartment; and
   at least one electrical cell module mounted in the unit compartment;
wherein each housing unit is configured so that its wall is releasably mountable in an assembled position to the corresponding wall of an adjacent housing unit;
wherein the coolant sub-system is configured to deliver coolant to cool the at least one electrical cell module.

Example Ex2. The modular housing system of Ex1, wherein, in the assembled position, the base of a first housing unit forms a closure of the compartment opening of an adjacent, second housing unit.

Example Ex3. The modular housing system of Ex1 or Ex2, wherein the base comprises a cooling plate.

Example Ex4. The modular housing system of any one of Ex1 to Ex3, wherein the wall is releasably coupled to the base.

Example Ex5. The modular housing system of any one of Ex1 to Ex4, wherein the coolant sub-system comprises a thermal conditioning unit mounted to an upper end of the modular housing system.

Example Ex6. The modular housing system of any one of Ex1 to Ex5, wherein the first housing unit comprises a first receiving surface and wherein, in the assembled position, the first receiving surface seals against the compartment opening of the second housing unit.

Example Ex7. The modular housing system of any one of Ex1 to Ex6, wherein each housing unit comprises a coolant inlet in the base of the housing unit, and wherein each housing unit comprises a first coolant manifold portion mounted to the wall and fluidly connected to between the coolant inlet and the thermal conditioning unit.

Example Ex8. The modular housing system of Ex7, wherein the first coolant manifold portions are configured so that, in the assembled position, the first coolant manifold portions collectively form a first coolant manifold.

Example Ex9. The modular housing system of any one of Ex1 to Ex8, wherein each housing unit comprises a second coolant manifold portion mounted to the wall and fluidly connected between the thermal conditioning unit and a coolant outlet in the base of the respective housing unit.

Example Ex10. The modular housing system of Ex9, wherein the second coolant manifold portions are configured so that, in the assembled position, the second coolant manifold portions collectively form a second coolant manifold.

Example Ex11. The modular housing system of any one of Ex1 to Ex10, wherein the electrical cell module comprises a plurality of blade cells.

Example Ex12. The modular housing system of Ex11, wherein each blade cell of the series of blade cells comprises a pair of terminals, and wherein the electrical cell module comprises a busbar assembly electrically connected to the terminals.

Example Ex13. The modular housing system of any one of Ex1 to Ex12, wherein, in the assembled position, the plurality of housing units collectively provide a structural support assembly for the thermal conditioning unit and the electrical cell modules received within the plurality of housing units, wherein the structural support assembly is configured to be releasably mounted a vehicle chassis structure.

Example Ex14. The modular housing system of any one of Ex1 to Ex13, wherein each housing unit further comprises at least one pair of connector ports extending through the wall of the housing unit to support a pair of unit terminals on an outer wall face of the housing unit, and wherein the at least one electrical cell module mounted within the unit compartment is electrically connected in series between the pair of unit terminals.

Example Ex15. The modular housing system of any one of Ex1 to Ex14, further comprising a harness element, wherein the harness element is configured to electrically connect a first unit terminal of a first housing unit to a second unit terminal of an adjacent, second housing unit.

Example Ex16. The modular housing system of any one of Ex1 to Ex15, comprising a power convertor assembly configured to convert an electrical charge from the electrical modules of the modular housing system into an electrical drive output for an electric vehicle drive system.

Example Ex17. The modular housing system of Ex16, wherein the electrical drive output has a voltage in a range of from 200 volts to 4,000 volts, for example 800 volts to 2,000 volts, for example 1800 volts.

Example Ex18. The modular housing system of Ex16 or Ex17, wherein the power convertor assembly is mounted to a lower end of the modular housing system.

Example Ex19. The modular housing system of any one of claim Ex16 to Ex18, wherein the coolant sub-system is configured so that its thermal conditioning unit is fluidly connected to the power convertor assembly to provide cooling of the power convertor assembly.

Example Ex20. An electric vehicle energy storage system comprising one or more modular housing system according to any one of Ex1 to Ex19.

Example Ex21. An electric vehicle energy storage system according to Ex20, wherein each coolant sub-system is fluidly connected to a radiator.

Example Ex22. An electric vehicle energy storage system according to Ex20 or Ex21, wherein each modular housing system comprises a power convertor assembly configured to convert an electrical charge from the electrical modules of the respective modular housing system into an electrical drive output for a vehicle drive train.

Example Ex23. A modular housing system for electrical cell modules for an electric vehicle, the modular housing system includes:
a power convertor assembly; and
a plurality of housing units, wherein each housing unit of the plurality of housing units including:
   a base having an upper face;
   a wall circumscribing the base and extending away from the upper face to define a compartment opening; and
   a unit compartment, accessible through the compartment opening and defined within the upper face and the wall, wherein the housing is configured to receive at least one electrical cell module, optionally through the compartment opening, for mounting in the unit compartment; and
   at least one electrical cell module mounted in the unit compartment;
wherein each housing unit is configured so that its wall is releasably mountable in an assembled position to the corresponding wall of an adjacent housing unit;
wherein the power convertor assembly is configured to convert an electrical charge from the electrical modules of the respective modular housing system into an electrical drive output for a vehicle drive train.

Example Ex24. A modular housing system of Ex23, wherein the power convertor assembly is a DC-DC power convertor.

Clause 1. A modular housing unit for supporting an electrical cell module in an electric vehicle, the housing unit comprising:
a base having an upper face;
a wall circumscribing the base and extending away from the upper face to define a compartment opening; and
a unit compartment defined within the upper face and the wall, wherein the unit compartment is accessible through the compartment opening;
wherein the housing unit is configured to receive, optionally through the compartment opening, at least one electrical cell module for mounting in the unit compartment; and
wherein the wall is configured to be releasably mountable in an assembled position to a corresponding wall of a second housing unit so that, in the assembled position, the base of the second housing unit forms a closure of the compartment opening.

Clause 2. The modular housing unit of clause 1, wherein the wall extends from a proximal portion, engaged with the base of housing unit, to a distal portion, wherein the distal portion defines a perimeter of the compartment opening.

Clause 3. The modular housing unit of clause 1 or 2, wherein the base of the housing unit comprises a cooling plate configured to contactingly engage each stack of cells of the at least one electrical cell module mounted in the unit compartment.

Clause 4. The modular housing unit of clause 3, wherein the cooling plate comprises a series of recesses configured to conform to a lower face of each of the electrical cell modules mounted in the unit compartment.

Clause 5. The modular housing unit of clause 3 or 4, wherein the cooling plate is releasably mounted to the base within the unit compartment.

Clause 6. The modular housing unit of any one of clauses 1 to 5, wherein the wall of the housing unit provides a structural support for the electrical cell modules received within the housing unit.

Clause 7. The modular housing unit of any one of clauses 1 to 6, wherein the wall comprises an inner wall face, oriented into the unit compartment, and an outer wall face, and wherein the modular housing unit further comprises one, or more than one, of:
- a first coolant manifold portion mounted to the outer wall face, wherein the first coolant manifold portion is fluidly connected to a coolant inlet in the base of the housing unit;
- a second coolant manifold portion mounted to the outer wall face, wherein the second coolant manifold portion is fluidly connected to a coolant outlet in the base of the housing unit;
- a first suppressant manifold portion mounted to the outer wall face, wherein the first suppressant manifold portion is fluidly connected to the unit compartment through an inlet bore formed through the wall;
- at least one connector port extending through the wall of the housing unit to support one or more unit terminals on the outer wall face of the housing unit, wherein the unit terminals are configured to be electrically connected to the at least one electrical cell module mounted within unit compartment; and a harness element, wherein the harness element is configured to electrically connect a first unit terminal of the housing unit to a second unit terminal of an adjacent, second housing unit; or
- a fuse assembly configured so that a fuse is electrically connectable between an electrical cell module mounted in the unit compartment and a unit terminal of the housing unit, and wherein the fuse assembly is mounted through an aperture in the wall so that the fuse is accessible from the outer wall face of the housing unit.

Clause 8. A modular housing system for electrical cell modules for an electric vehicle, the modular housing system comprising:
a plurality of housing units, wherein each housing unit of the plurality of housing units comprising:
   a base having an upper face;
   a wall circumscribing the base and extending away from the upper face to define a compartment opening; and
   a unit compartment, accessible through the compartment opening and defined within the upper face and the wall, wherein the compartment opening is configured to receive at least one electrical cell module through the compartment opening for mounting in the unit compartment; and
   at least one electrical cell module mounted in the unit compartment;
wherein each housing unit is configured so that its wall is releasably mountable in an assembled position to the corresponding wall of an adjacent housing unit so that, in the assembled position, the base of a first housing unit forms a closure of the compartment opening of an adjacent, second housing unit.

Clause 9. The modular housing system of clause 8, wherein the first housing unit comprises a first receiving surface and wherein, in the assembled position, the first receiving surface seals against the compartment opening of the second housing unit.

Clause 10. The modular housing system of clause 8 or 9, wherein each housing unit comprises a first coolant manifold portion mounted to the wall and fluidly connected to a coolant inlet in the base of the respective housing unit, and wherein the first coolant manifold portions are configured so that, in the assembled position, the first coolant manifold portions collectively form a first coolant manifold.

Clause 11. The modular housing system of any one of clauses 8 to 10, wherein each housing unit comprises a second coolant manifold portion mounted to the wall and fluidly connected to a coolant outlet in the base of the respective housing unit, and wherein the second coolant manifold portions are configured so that, in the assembled position, the second coolant manifold portions collectively form a second coolant manifold.

Clause 12. The modular housing system of any one of clauses 8 to 11, wherein one of the housing units of the plurality of housing units comprises a power distribution assembly mounted in the unit compartment and electrically connected to the unit terminals of the plurality of housing units, and wherein the power distribution assembly comprises one or more power terminals for discharging electrical charge from the electrical cell modules mounted within the plurality of housing units.

Clause 13. A method of assembling a modular electrical energy storage system, the method comprising:
providing a plurality of housing units, each housing unit of the plurality of housing units comprising:
   a base having an upper face;
   a wall circumscribing the base and extending away from the upper face to define a compartment opening; and
   a unit compartment, accessible through the compartment opening; providing a plurality of electrical cell modules;
inserting at least one electrical cell module of the plurality of electrical cell modules into each housing unit, optionally through the respective compartment opening, and mounting the at least one electrical cell module to the housing unit; and
releasably mounting a first housing unit of the plurality of housing units to a second housing unit of the plurality of housing units in an assembled position so that, in the assembled position, the base of the first housing unit forms a closure of the compartment opening of the second housing unit.

Clause 14. The method of clause 13, comprising a further step of providing a first coolant manifold portion mounted to the wall of each housing unit of the plurality of housing units, wherein each first coolant manifold portion is fluidly connected to a coolant inlet in the base of the respective housing unit; and
wherein the step of releasably mounting the first housing unit to the second housing unit in the assembled position also forms a coolant flow path between the respective first coolant manifold portions.

Clause 15. The method of clause 13 or 14, comprising a further step of providing a second coolant manifold portion mounted to the wall and of each housing unit of the plurality of housing units, wherein each second coolant manifold portion is fluidly connected to a coolant outlet in the base of the respective housing unit; and
wherein the step of releasably mounting the first housing unit to the second housing unit in the assembled position also forms a coolant flow path between the respective second coolant manifold portions.

## Claims

1. A modular housing system for electrical cell modules for an electric vehicle, the modular housing system comprising:
a power convertor assembly; and
a plurality of housing units, wherein each housing unit of the plurality of housing units comprising:
a base having an upper face;
a wall circumscribing the base and extending away from the upper face to define a compartment opening; and
a unit compartment, accessible through the compartment opening and defined within the upper face and the wall, wherein the compartment opening is configured to receive at least one electrical cell module through the compartment opening for mounting in the unit compartment; and
at least one electrical cell module mounted in the unit compartment;
wherein each housing unit is configured so that its wall is releasably mountable in an assembled position to the corresponding wall of an adjacent housing unit;
wherein the power convertor assembly is configured to convert an electrical charge from the electrical modules of the respective modular housing system into an electrical drive output for a vehicle drive train.

2. The modular housing system of claim 1, wherein, in the assembled position, the base of a first housing unit forms a closure of the compartment opening of an adjacent, second housing unit.

3. The modular housing system of claim 1 or claim 2, wherein the base comprises a cooling plate.

4. The modular housing system claim 3, wherein the cooling plate is configured to contactingly engage the power convertor assembly.

5. The modular housing system of any one of claims 1 to 4, wherein the wall is releasably coupled to the base.

6. The modular housing system of any one of claims 1 to 5, comprising a coolant sub-system comprising a thermal conditioning unit fluidly connected to the power convertor assembly to provide cooling of the power convertor assembly.

7. The modular housing system of any one of claims 1 to 5, wherein the first housing unit comprises a first receiving surface and wherein, in the assembled position, the first receiving surface seals against the compartment opening of the second housing unit.

8. The modular housing system of claim 7, wherein each housing unit comprises a coolant inlet in the base of the housing unit, and wherein each housing unit comprises a first coolant manifold portion mounted to the wall and fluidly connected to between the coolant inlet and the thermal conditioning unit and, optionally, wherein the first coolant manifold portions are configured so that, in the assembled position, the first coolant manifold portions collectively form a first coolant manifold.

9. The modular housing system of any one of claims 1 to 9, wherein the electrical cell module comprises a plurality of blade cells and, optionally, wherein each blade cell of the series of blade cells comprises a pair of terminals, and wherein the electrical cell module comprises a busbar assembly electrically connected to the terminals.

10. The modular housing system of any one of claims 1 to 9, wherein, in the assembled position, the plurality of housing units collectively provide a structural support assembly for the thermal conditioning unit and the electrical cell modules received within the plurality of housing units, wherein the structural support assembly is configured to be releasably mounted a vehicle chassis structure.

11. The modular housing system of any one of claims 1 to 10, wherein each housing unit further comprises at least one pair of connector ports extending through the wall of the housing unit to support a pair of unit terminals on an outer wall face of the housing unit, and wherein the at least one electrical cell module mounted within the unit compartment is electrically connected in series between the pair of unit terminals, and, optionally, further comprising a harness element, wherein the harness element is configured to electrically connect a first unit terminal of a first housing unit to a second unit terminal of an adjacent, second housing unit.

12. The modular housing system of any one of claims 1 to 11, wherein the power convertor assembly is a DC-DC power convertor.

13. The modular housing system of any one of claims 1 to 12, wherein the electrical drive output has a voltage in a range of from 200 volts to 4,000 volts, for example 800 volts to 2,000 volts, for example 1800 volts.

14. The modular housing system of claim 13, wherein the power convertor assembly is mounted to a lower end of the modular housing system.

15. An electric vehicle energy storage system comprising one or more modular housing system according to any one of claims 1 to 14 wherein each modular housing system comprises a power convertor assembly configured to convert an electrical charge from the electrical modules of the respective modular housing system into an electrical drive output for a vehicle drive train.
